# EUROPÄISCHE PATENTANMELDUNG

(11) **EP 4 474 781 A2**
(43) Veröffentlichungstag der Anmeldung: **11.12.2024**
(21) Anmeldenummer: 24208018.2
(22) Anmeldetag: 22.09.2015
(51) Int. Cl.: G01H 3/00

(54) **VERFAHREN ZUR ZUSTANDSERMITTLUNG IN EINEM SCHIENENFAHRZEUG**

(30) Priorität: 22.09.2014 DE 102014113669
(62) Teilanmeldung aus: 15767471.4
(71) Anmelder: ALSTOM Holdings, 93400 Saint-Ouen-sur-Seine (FR)
(72) Erfinder: BRUNDISCH, Volker, 57250 Netphen-Salchendorf (DE)
(74) Vertreter: Cohausz & Florack

(57) **Zusammenfassung**

Die vorliegende Erfindung betrifft ein Verfahren zur Ermittlung eines Wertes wenigstens eines Zustandsparameters eines Schienenfahrzeugs (101) und/oder einer Fahrstrecke eines Schienenfahrzeugs (101), bei dem in wenigstens einem Erfassungsschritt wenigstens ein mit dem aktuellen Wert des Zustandsparameters korreliertes aktuelles erstes Erfassungssignal über einen ersten Signalaufnehmer (106.1, 106.2, 106.3) an einer Struktur im Inneren des Schienenfahrzeugs (101) erfasst wird, wobei zur Erfassung des aktuellen ersten Erfassungssignals ein erster Signalaufnehmer (106.1, 106.2, 106.3) eines mobilen Endgerätes (106) verwendet wird. Zur Ermittlung des Wertes des wenigstens einen Zustandsparameters wird ein Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, ausgewertet.

## Beschreibung

### HINTERGRUND DER ERFINDUNG

Die vorliegende Erfindung betrifft ein Verfahren zur Ermittlung eines Wertes wenigstens eines Zustandsparameters eines Schienenfahrzeugs und/oder einer Fahrstrecke eines Schienenfahrzeugs, bei dem in wenigstens einem Erfassungsschritt wenigstens ein mit dem aktuellen Wert des Zustandsparameters korreliertes aktuelles erstes Erfassungssignal über einen ersten Signalaufnehmer an einer Struktur im Inneren des Schienenfahrzeugs erfasst wird, wobei zur Erfassung des aktuellen ersten Erfassungssignals ein erster Signalaufnehmer eines mobilen Endgerätes verwendet wird. Die Erfindung betrifft weiterhin eine entsprechende Anordnung sowie ein entsprechendes mobiles Endgerät zur Ermittlung eines Wertes eines solchen Zustandsparameters.

Bei Schienenfahrzeugen besteht aus Sicherheitsgründen, aber nicht zuletzt auch aufgrund stetigen Kostendrucks typischerweise die Anforderung, Schäden oder bestimmte Verschleißzustände an Fahrzeugkomponenten möglichst frühzeitig bzw. rechtzeitig zu erkennen und entsprechende Maßnahmen zu ergreifen, um Gefahren für die Passagiere oder das Umfeld des Fahrzeugs abzuwenden. Vergleichbares gilt für die befahrene Infrastruktur. Aus diesem Grund sind moderne Schienenfahrzeuge häufig mit entsprechenden proprietären Sensoreinheiten ausgestattet, welche Signale am Fahrzeug erfassen, aus denen der aktuelle Wert bestimmter Zustandsparameter des Fahrzeugs abgeleitet werden kann, die ihrerseits wiederum für einen bestimmten Zustand des Fahrzeugs (typischerweise einen bestimmten Zustand einer oder mehrerer Komponenten des Fahrzeugs) charakteristisch sind.

So können typischerweise aus bestimmten Vibrationsmustern der Fahrzeugstruktur Rückschlüsse auf die Schädigungsart, gegebenenfalls sogar den Schädigungsgrad, bestimmter bewegter bzw. angetriebener Komponenten des Fahrzeugs geschlossen werden. So können bestimmte Vibrationsmuster am Fahrzeug beispielsweise auf eine bestimmte Schädigung eines Motorläufers, des Getriebes, der Wellen und/oder Räder etc. des Fahrzeugs hinweisen.

Problematisch dabei ist, dass die bisher bei der Erfassung verwendeten proprietären Sensoreinheiten relativ teuer und aufwändig in ihrer Implementierung sind, sodass sie sich nicht zuletzt aus wirtschaftlichen Gründen nicht für einen flächendeckenden Einsatz eignen.

Aus der DE 10 2012 014 331 A1 ist im Zusammenhang mit der Identifikation der Streckenqualität von Fahrwegen ein gattungsgemäßes Verfahren bekannt, bei dem ausschließlich vertikale Beschleunigungen, die auf das Fahrzeug wirken, über die Beschleunigungssensoren eines mobilen Endgerätes, beispielsweise eines so genannten Smartphones, erfasst werden. Bei diesem Verfahren, können jedoch nur vergleichsweise grobe Rückschlüsse auf den Zustand des Fahrwegs (beispielsweise Schlaglöcher oder dergleichen in einer Straße) geschlossen werden, nicht jedoch auf Schädigungen von Komponenten des Fahrzeugs bzw. feiner aufgelöste bzw. komplexere Schäden an der Infrastruktur.

### KURZE BESCHREIBUNG DER ERFINDUNG

Der vorliegenden Erfindung liegt daher die Aufgabe zu Grunde, ein Verfahren, eine Anordnung sowie ein mobiles Endgerät der eingangs genannten Art zur Verfügung zu stellen, welches bzw. welche die oben genannten Probleme nicht oder zumindest in geringerem Maße mit sich bringt und insbesondere auf einfache Weise eine zuverlässige und kostengünstige Ermittlung aktueller Werte entsprechender Zustandsparameter des Schienenfahrzeugs bzw. des befahrenen Fahrwegs ermöglicht, aus denen Rückschlüsse auf den aktuellen Verschleißzustand bzw. Schädigungszustand des Fahrzeugs bzw. Fahrwegs gezogen werden können.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 12 durch die im kennzeichnenden Teil des Anspruchs 12 angegebenen Merkmale. Sie löst diese Aufgabe weiterhin ausgehend von einem mobilen Endgerät gemäß dem Oberbegriff des Anspruchs 15 durch die im kennzeichnenden Teil des Anspruchs 15 angegebenen Merkmale.

Der vorliegenden Erfindung liegt die technische Lehre zu Grunde, dass man auf einfache Weise eine zuverlässige und kostengünstige Ermittlung aktueller Werte entsprechender Zustandsparameter des Schienenfahrzeugs bzw. des befahrenen Fahrwegs ermöglicht, aus denen Rückschlüsse auf den aktuellen Verschleißzustand bzw. Schädigungszustand des Fahrzeugs bzw. Fahrwegs gezogen werden können, wenn man zur Ermittlung des Wertes des wenigstens einen Zustandsparameters höhere Frequenzbereiche eines Erfassungssignals, insbesondere aber mehrerer unterschiedlicher Erfassungssignale analysiert. So hat sich gezeigt, dass die interne Sensorik solcher mobiler Endgeräte Signale mit ausreichender Frequenzauflösung generiert, welche eine Auswertung in höheren Frequenzbereichen oberhalb von 1 Hz bis 2 Hz, vorzugsweise oberhalb von 4 Hz, ermöglicht.

Gerade in diesen höheren Frequenzbereichen liegen die Systemantworten des Fahrzeugs (wie beispielsweise die mechanischen und/oder akustischen Schwingungen), welche für die Analyse des Verschleißzustandes bzw. Schädigungszustandes des Fahrzeugs bzw. Fahrwegs relevant sind. Es versteht sich hierbei, dass je nach der interessierenden Komponente des Fahrzeugs bzw. je nach dem interessierenden Aspekt des Fahrwegs bzw. je nach der interessierenden Schwingungsanregung bzw. je nach der Art des verwendeten Signalaufnehmers unterschiedliche Frequenzbereiche betrachtet bzw. analysiert werden können.

So können beispielsweise bei einer Schwingungsanalyse von Komponenten, deren Schwingungsanregung durch rotierende Komponenten des Fahrzeugs erfolgt, typischerweise die jeweilige Rotationsfrequenz der schwingungsanregenden Komponente(n) sowie gegebenenfalls Harmonische davon untersucht werden. Natürlich spielt aber auch der jeweilige nutzbare Frequenzbereich des verwendeten Signalaufnehmers eine Rolle bei der Analyse.

So werden bei der Schwingungsanalyse von Federungskomponenten des Fahrwerks typischerweise bevorzugt Frequenzbereiche von 1 Hz bis 10 Hz, vorzugsweise von 1 Hz bis 4 Hz, weiter vorzugsweise von 1 Hz bis 2 Hz, untersucht. Bei der mechanischen Schwingungsanalyse von Komponenten des Fahrwerks bzw. des Antriebsstranges bzw. von hierdurch schwingungsangeregten Strukturbauteilen des Wagenkastens werden typischerweise bevorzugt Frequenzbereiche von 2 Hz bis 50 Hz, vorzugsweise von 4 Hz bis 40 Hz, weiter vorzugsweise von 5 Hz bis 30 Hz, untersucht. Bei akustischen Analysen werden hingegen typischerweise bevorzugt Frequenzbereiche von 10 Hz bis 20 kHz, vorzugsweise von 50 Hz bis 10 kHz, weiter vorzugsweise von 100 Hz bis 1 kHz, untersucht.

Zudem erlauben derartige mobile Endgeräte in der Regel die gleichzeitige Erfassung mehrerer unterschiedlicher Signale (wie beispielsweise Beschleunigungssignalen, Drehratensignalen, akustischen Signalen etc.), deren kombinierte Auswertung eine zuverlässigere Bewertung des Verschleißzustandes bzw. Schädigungszustandes des Fahrzeugs bzw. Fahrwegs ermöglicht.

Es versteht sich hierbei weiterhin, dass der Signalaufnehmer nicht notwendigerweise ein interner Sensor des mobilen Endgerätes sein muss. Vielmehr kann es sich dabei auch um einen externen Sensor handeln, der (zeitweilig oder permanent) mit dem mobilen Endgerät (drahtgebunden und/oder drahtlos) verbunden ist, um das betreffende Erfassungssignal zu generieren,

Gemäß einem Aspekt betrifft die Erfindung daher ein Verfahren zur Ermittlung eines Wertes wenigstens eines Zustandsparameters eines Schienenfahrzeugs und/oder einer Fahrstrecke eines Schienenfahrzeugs, bei dem in wenigstens einem Erfassungsschritt wenigstens ein mit dem aktuellen Wert des Zustandsparameters korreliertes aktuelles erstes Erfassungssignal über einen ersten Signalaufnehmer an einer Struktur im Inneren des Schienenfahrzeugs erfasst wird, wobei zur Erfassung des aktuellen ersten Erfassungssignals ein erster Signalaufnehmer eines mobilen Endgerätes verwendet wird. Zur Ermittlung des Wertes des wenigstens einen Zustandsparameters wird ein Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, ausgewertet.

Als mobiles Endgerät können grundsätzlich beliebige mobile Endgeräte verwendet, welche wenigstens einen geeigneten solchen Signalaufnehmer aufweisen. Bevorzugt wird als mobiles Endgerät ein Mobiltelefon, insbesondere ein Smartphone, oder ein Tablet-Computer oder ein mobiles Navigationsgerät oder eine SmartWatch verwendet. Hiermit lassen sich besonders kostengünstige Lösungen erzielen.

Grundsätzlich können beliebige Signalaufnehmer verwendet werden, deren Signal bei einer ausreichend hohen Frequenzauflösung Rückschlüsse auf den aktuellen Verschleißzustand bzw. Schädigungszustand des Fahrzeugs bzw. Fahrwegs ermöglicht. Besonderes einfache Lösungen mit aussagekräftige Ergebnissen hinsichtlich des aktuellen Verschleißzustandes bzw. Schädigungszustandes lassen sich erzielen, wenn als Signalaufnehmer wenigstens ein Beschleunigungssensor des mobilen Endgerätes verwendet wird und/oder wenigstens ein Drehratensensor des mobilen Endgerätes und/oder wenigstens ein Mikrofon des mobilen Endgerätes und/oder wenigstens eine Kamera des mobilen Endgerätes und/oder wenigstens ein Temperatursensor des mobilen Endgerätes und/oder wenigstens ein Magnetfeldsensor des mobilen Endgerätes verwendet wird. Hierbei kann es sich wie erwähnt jeweils sowohl um einen internen Sensor des mobilen Endgerätes als auch um einen externen Sensor handeln, der (zeitweilig oder permanent) mit dem mobilen Endgerät (drahtgebunden und/oder drahtlos) verbunden ist, um das betreffende Erfassungssignal zu generieren.

Als Struktur im Inneren des Fahrzeugs, an der das entsprechende Signal abgegriffen bzw. aufgenommen wird, eignen sich grundsätzlich beliebige Strukturen innerhalb des Fahrzeugs, solange die signaltechnische Kopplung (mithin also die Übertragungsfunktion) zwischen der Struktur und der (für die Zustandsanalyse) interessierenden Fahrzeugkomponente bzw. dem Fahrweg in hinreichendem Umfang bekannt ist. Bevorzugt ist die Struktur im Inneren des Fahrzeugs eine Ablageeinrichtung, insbesondere eine Gepäckablage und/oder ein Tisch und/oder eine Ablage eines Sitzes und/oder ein, insbesondere verschließbares, Fach des Fahrzeugs, wobei das mobile Endgerät dann für den Erfassungsschritt mit der Ablageeinrichtung verbunden wird, insbesondere auf die Ablageeinrichtung aufgelegt wird. Zusätzlich oder alternativ kann die Struktur im Inneren des Fahrzeugs eine Wandeinrichtung, insbesondere eine Seitenwand, sein, wobei das mobile Endgerät dann für den Erfassungsschritt mit der Wandeinrichtung verbunden wird.

Zusätzlich oder alternativ kann das mobile Endgerät für den Erfassungsschritt fest, insbesondere im Wesentlichen starr, mit der Struktur im Inneren des Fahrzeugs verbunden werden, wodurch insbesondere eine hinreichend definierte Signalübertragung bzw. Übertragungsfunktion zwischen der Struktur und dem mobilen Endgerät sichergestellt ist. Zusätzlich oder alternativ kann das mobile Endgerät für den Erfassungsschritt mittels einer Klemmeinrichtung mit der Struktur im Inneren des Fahrzeugs verbunden werden, um insbesondere eine hinreichend definierte Signalübertragung bzw. Übertragungsfunktion zwischen der Struktur und dem mobilen Endgerät sicherzustellen.

Zusätzlich oder alternativ kann das mobile Endgerät für den Erfassungsschritt mittels einer Halterung mit der Struktur im Inneren des Fahrzeugs verbunden werden. Die Halterung kann dabei an beliebiger geeigneter Stelle im Fahrzeug angeordnet sein. Beispielsweise kann sie im Bereich eines Tisches oder eines Sitzes des Fahrzeugs angeordnet sein. Bei weiteren Varianten der Erfindung kann die Halterung in einem Fach des Fahrzeugs angeordnet sein, wobei das Fach vorzugsweise verschließbar ausgebildet ist. Besonders günstig ist es, wenn die Halterung einer Ladeeinrichtung für die Stromversorgung des Endgeräts räumlich zugeordnet ist. Dabei ist es natürlich besonders komfortabel und damit vorteilhaft, wenn es sich um eine (beispielsweise induktive) Ladeeinrichtung handelt, welche gegebenenfalls ein kabelloses Aufladen des Akkumulators des Endgerätes ermöglicht.

Für die Analyse des aktuellen Verschleißzustandes bzw. Schädigungszustandes der interessierenden Einheit kann es grundsätzlich ausreichen, eine Messreihe aus einem Erfassungsschritt zu analysieren. Hierbei kann es sich beispielsweise um eine Messreihe handeln, welche bei einem einmaligen Überfahren eines bestimmten Streckenabschnitts aufgenommen wurde.

Bei bestimmten bevorzugten Varianten des erfindungsgemäßen Verfahrens können mehrere Messreihen aufgenommen und für die Analyse herangezogen werden. In diesen Fällen kann das mobile Endgerät grundsätzlich stets in derselben Messposition und/oder Messorientierung mit der Struktur im Inneren des Fahrzeugs verbunden sein. Um aussagekräftigere Ergebnisse zu erzielen bzw. das Risiko unerkannter Fehlfunktionen einzelner Sensoren zu reduzieren, kann jedoch auch vorgesehen sein, dass das mobile Endgerät für einen ersten Erfassungsschritt bei einem ersten Durchfahren eines vorgebbaren Streckenabschnitts der Fahrstrecke in einer vorgebbaren ersten Messposition und/oder Messorientierung mit der Struktur im Inneren des Fahrzeugs verbunden wird, während das mobile Endgerät für einen zweiten Erfassungsschritt bei einem zweiten Durchfahren des vorgebbaren Streckenabschnitts in einer vorgebbaren zweiten Messposition und/oder Messorientierung mit der Struktur im Inneren des Fahrzeugs verbunden wird.

Bei weiteren bevorzugten Varianten der Erfindung wird in einem Ermittlungsschritt der Wert des wenigstens einen Zustandsparameters unter Verwendung des aktuellen ersten Erfassungssignals aus wenigstens einem vorangegangenen Erfassungsschritt ermittelt. Dabei kann in dem Ermittlungsschritt der Wert des wenigstens einen Zustandsparameters insbesondere unter Verwendung der aktuellen ersten Erfassungssignale aus einer Mehrzahl von vorangegangenen Erfassungsschritten ermittelt werden. Hiermit ist es in einfacher Weise möglich, die Historie der Erfassungssignale, mithin also auch des Verschleißzustandes bzw. Schädigungszustandes der interessierenden Einheit, bei der Analyse zu berücksichtigen.

Bei bevorzugten Varianten der Erfindung wird bei der Analyse des Verschleißzustandes bzw. Schädigungszustandes der interessierenden Einheit ein Vergleich zwischen einem hinreichend bekannten vorherigen Zustand und dem aktuellen Zustand vorgenommen, wie er sich aus der aktuellen Messung ergibt, da hierdurch insbesondere zuverlässige Rückschlüsse auf der Zustandsänderung zugrundeliegende Verschleißmechanismen bzw. Schädigungsmechanismen gezogen werden können.

Der Vergleichszustand kann grundsätzlich auf beliebige Weise, insbesondere rechnerisch und/oder über entsprechende Vergleichsmessungen an dem Fahrzeug selbst oder einem vergleichsfahrzeug erfasst worden sein.

Bei bestimmten Varianten der Erfindung wird der Wert des wenigstens einen Zustandsparameters in dem Ermittlungsschritt unter Verwendung von wenigstens einem Vergleichserfassungssignal aus wenigstens einem vorangegangenen Vergleichserfassungsschritt ermittelt. Dabei kann der Wert des wenigstens einen Zustandsparameters in dem Ermittlungsschritt insbesondere unter Verwendung der aktuellen ersten Erfassungssignale aus einer Mehrzahl von vorangegangenen Erfassungsschritten und einer Mehrzahl von Vergleichserfassungssignalen aus einer Mehrzahl von vorangegangenen Vergleichserfassungsschritten ermittelt werden.

Zusätzlich oder alternativ kann vorgesehen sein, dass der wenigstens eine Vergleichserfassungsschritt an dem Fahrzeug selbst durchgeführt wurde oder an einem Vergleichsfahrzeug, welches dem Fahrzeug zumindest nach dem Fahrzeugtyp entspricht. Zusätzlich oder alternativ kann vorgesehen sein, dass der wenigstens eine Vergleichserfassungsschritt an dem Fahrzeug selbst in einem bekannten Zustand, insbesondere in einem Neuzustand oder einem Wartungszustand, durchgeführt wurde, in dem ein definierter Wert des wenigstens einen Zustandsparameters gegeben ist.

Bei anderen Varianten der Erfindung mit rechnerisch ermittelten Vergleichswerten kann der Wert des wenigstens einen Zustandsparameters in dem Ermittlungsschritt unter Verwendung von wenigstens einem Vergleichsmodellwert ermittelt werden, der seinerseits aus einem Vergleichsmodell des Fahrzeugs ermittelt wurde. Dabei kann vorgesehen sein, dass das Vergleichsmodell insbesondere wenigstens einen erwarteten Wert des ersten Erfassungssignales zum Zeitpunkt der Erfassung des wenigstens einen aktuellen ersten Erfassungssignales liefert.

Wie bereits erwähnt ermöglichen besonders geeignete mobile Endgeräte die gleichzeitige Erfassung unterschiedlicher Erfassungssignale, wodurch eine zuverlässigere Analyse des Verschleißzustandes bzw. Schädigungszustandes der interessierenden Einheit möglich ist. Bevorzugt ist daher vorgesehen, dass in dem wenigstens einen Erfassungsschritt wenigstens ein mit dem aktuellen Wert des wenigstens einen Zustandsparameters korreliertes aktuelles zweites Erfassungssignal über einen zweiten Signalaufnehmer an dem Schienenfahrzeug erfasst wird und in dem Ermittlungsschritt der Wert des wenigstens einen Zustandsparameters unter Verwendung des aktuellen ersten Erfassungssignals und des aktuellen zweiten Erfassungssignals aus wenigstens einem vorangegangenen Erfassungsschritt, insbesondere aus einer Mehrzahl von vorangegangenen Erfassungsschritten, ermittelt wird.

Hierbei kann vorgesehen sein, dass zur Erfassung des aktuellen zweiten Erfassungssignals ein zweiter Signalaufnehmer des mobilen Endgerätes verwendet wird. Zusätzlich oder alternativ kann zur Ermittlung des Wertes des wenigstens einen Zustandsparameters insbesondere ein Frequenzbereich des aktuellen zweiten Erfassungssignals oberhalb von 1 Hz bis 2 Hz, vorzugsweise von 4 Hz bis 15 kHz, weiter vorzugsweise von 10 Hz bis 1 kHz, ausgewertet werden, um auch insoweit eine Berücksichtigung der aussagekräftigen Frequenzbereiche zu erreichen. Zusätzlich oder alternativ kann.

Grundsätzlich können für das erste und zweite Erfassungssignal unterschiedliche Frequenzen bzw. Frequenzbereiche herangezogen werden, insbesondere je nachdem, in welchem Frequenzbereich sich der Verschleiß bzw. die Schädigung auf das jeweilige Erfassungssignal auswirkt. Bei bestimmten Varianten der Erfindung kann zur Ermittlung des Wertes des wenigstens einen Zustandsparameters jedoch auch im Wesentlichen derselbe Frequenzbereich des aktuellen ersten und zweiten Erfassungssignals ausgewertet werden.

Es können grundsätzlich beliebige Kombinationen von Erfassungssignalen analysiert werden. Besonders aussagekräftige Resultate ergeben sich jedoch, wenn als erster Signalaufnehmer wenigstens ein Beschleunigungssensor und/oder wenigstens ein Drehratensensor des mobilen Endgerätes verwendet wird und als zweiter Signalaufnehmer wenigstens ein Mikrofon des mobilen Endgerätes verwendet wird. Gerade diese kombinierte Betrachtung mechanischer und akustischer Schwingungen ermöglicht zuverlässige Rückschlüsse auf den aktuellen Verschleißzustandes bzw. Schädigungszustandes.

Bei dem analysierten Zustandsparameter kann es sich grundsätzlich um einen beliebigen Zustandsparameter handeln, welcher geeignete Rückschlüsse auf den Verschleißzustand bzw. Schädigungszustand der interessierenden Einheit zulässt. Dabei können weiterhin beliebige Einheiten Gegenstand der Analyse sein. Bevorzugt ist der Wert des wenigstens einen Zustandsparameters daher für einen Zustand, insbesondere einen Verschleißzustand und/oder einen Integritätszustand wenigstens einer Fahrzeugkomponente des Fahrzeugs repräsentativ, wobei die Fahrzeugkomponente insbesondere eine Komponente eines Fahrwerks des Fahrzeugs und/oder eine Komponente einer Antriebseinrichtung des Fahrzeugs und/oder eine Komponente einer Hilfsbetriebseinrichtung des Fahrzeugs, insbesondere einer Klimaanlage und/oder eines Kompressors des Fahrzeugs, sein kann. Bei bevorzugten Varianten der Erfindung kann das erste Erfassungssignal mit einer für den Zeitpunkt seiner Erfassung repräsentativen Zeitkennung und/oder mit einer für die aktuelle Position des Fahrzeugs und/oder des Endgeräts repräsentativen Positionskennung und/oder mit wenigstens einer für den aktuellen Betriebszustand des Fahrzeugs, insbesondere eine aktuelle Fahrgeschwindigkeit des Fahrzeugs, repräsentativen Betriebsinformation und/oder mit einer Kennung des Fahrzeugs, insbesondere einmaligen und eindeutigen Kennung des Fahrzeugs, und/oder mit einer für die Position des Endgeräts innerhalb des Fahrzeugs während des Erfassungsschritts repräsentativen Messpositionsinformation verknüpft gespeichert werden. Hiermit ist es in vorteilhafter Weise möglich, die entsprechende Zeitinformation bzw. Positionsinformation bzw. Betriebszustandsinformation bzw. Fahrzeugidentifikation bzw. Messpositionsinformation in die Analyse einfließen zu lassen. Dies ist insbesondere in Fällen hilfreich, in denen mehrere zeitlich aufeinanderfolgende Messreihen analysiert werden. Insbesondere die Fahrzeugidentifikation erlaubt dabei eine schnelle Zuordnung des Erfassungssignals zum jeweiligen Fahrzeug, während die Messpositionsinformation Rückschlüsse auf die Signalübertragung bzw. Übertragungsfunktion zwischen der Struktur und dem mobilen Endgerät und damit insgesamt eine präzisere Analyse ermöglicht.

Bei bestimmten Varianten der Erfindung kann der Wert des wenigstens einen Zustandsparameters daher in dem Ermittlungsschritt unter Verwendung der Positionskennung und von einer für den Zustand der befahrenen Fahrstrecke repräsentativen Streckeninformation ermittelt werden. Dies hat den Vorteil, dass mit der Streckeninformation der Anteil bzw. Beitrag der Fahrstrecke zur erfassten Signalantwort des Fahrzeugs abgeschätzt bzw. berücksichtigt werden kann.

Zusätzlich oder alternativ kann der wenigstens eine Zustandsparameter ein Zustandsparameter des Fahrzeugs sein, wobei der Wert des wenigstens einen Zustandsparameters in dem Ermittlungsschritt unter Verwendung der Positionskennung und von ersten Erfassungssignalen aus einer Mehrzahl von Überfahrten des Fahrzeugs über einen vorgebbaren Streckenabschnitt der Fahrstrecke ermittelt werden. Hiermit kann anhand der Veränderung der erfassten Signalantwort des Fahrzeugs zwischen den Überfahrten des Fahrzeugs mit höherer Zuverlässigkeit auf den tatsächlichen Verschleißzustand bzw. Schädigungszustand geschlossen werden.

Bei weiteren Varianten der Erfindung kann der wenigstens eine Zustandsparameter ein Zustandsparameter der Fahrstrecke sein, wobei der Wert des wenigstens einen Zustandsparameters in dem Ermittlungsschritt dann unter Verwendung der Positionskennung und von ersten Erfassungssignalen aus einer Mehrzahl von Überfahrten des Fahrzeugs über einen vorgebbaren Streckenabschnitt der Fahrstrecke und/oder aus Überfahrten einer Mehrzahl von unterschiedlichen Fahrzeugen über einen vorgebbaren Streckenabschnitt der Fahrstrecke ermittelt wird. Hiermit kann anhand der Veränderung der erfassten Signalantwort des Fahrzeugs zwischen den Überfahrten des Fahrzeugs mit höherer Zuverlässigkeit auf den tatsächlichen Verschleißzustand bzw. Schädigungszustand der Strecke geschlossen werden. Gleiches gilt für ähnliche Signalantworten unterschiedlicher Fahrzeuge an derselben Position.

Das erste Erfassungssignal kann grundsätzlich in beliebiger geeigneter Weise gespeichert und zur Weiterverarbeitung weitergeleitet werden. Bevorzugt wird das erste Erfassungssignal in einer gegen Manipulation abgesicherten Weise, insbesondere in einer gegen unerkannte Manipulation abgesicherten Weise, gespeichert und/oder weitergeleitet. Hierzu können beliebige geeignete kryptographische Verfahren bzw. Mechanismen angewendet werden. Insbesondere kann das erste Erfassungssignal verschlüsselt und/oder mit einer digitalen Signatur versehen werden. Gleiches gilt natürlich für bereits entsprechend aufbereitete Daten, welche aus dem ersten Erfassungssignal generiert werden. Eine solche logische Absicherung der erfassten und/oder weiterverarbeiteten Daten ist insbesondere im Hinblick auf eine zuverlässige und manipulationssichere Analyse des Fahrzeugs und/oder des Fahrwegs von Vorteil.

Weiterhin ermöglicht eine solche logische Absicherung der zur Analyse verwendeten bzw. übermittelten Daten die sichere Implementierung von Anreizsystemen, mit denen eine Vielzahl von Nutzern des Fahrzeugs dazu bewegt werden können, ihre mobilen Endgeräte für die Zustandsanalyse zur Verfügung zu stellen, wie dies nachfolgend noch näher erläutert wird.

Die Kennung des Fahrzeugs und/oder die Messpositionsinformation wird bevorzugt in einem Erkennungsschritt über eine entsprechende Eingabeeinrichtung in das Endgerät eingegeben. Hierbei kann es sich um eine einfache Eingabe über eine Tastatur des Endgeräts handeln. Bei besonders vorteilhaften Varianten erfolgt die Eingabe über eine drahtlose Kommunikationseinrichtung und/oder einen Barcodescanner des Endgeräts.

Die Eingabe kann dabei durch den Nutzer des Endgeräts erfolgen, welcher über eine entsprechende Betätigung des Endgeräts das Einlesen der Kennung des Fahrzeugs und/oder die Messpositionsinformation veranlasst. So kann der Nutzer des Endgeräts beispielsweise einen am Fahrzeug angebrachten maschinenlesbaren Code (beispielsweise einen Barcode oder dergleichen) über eine entsprechende Leseeinrichtung (beispielsweise einen Barcodescanner) des Endgeräts einlesen. Ebenso ist es natürlich möglich, die entsprechende Information drahtgebunden oder drahtlos, beispielsweise über eine so genannte Nahfeldkommunikation (NFC), aus einem am Fahrzeug angebrachten Speicher auszulesen. Ein solches elektronisches Auslesen kann insbesondere automatisch erfolgen, beispielsweise beim Betreten des Fahrzeugs und/oder beim Verbinden des Endgeräts mit einer Halterung des Fahrzeugs.

Die Analyse der erfassten Daten kann grundsätzlich an beliebiger Stelle erfolgen. So kann der Ermittlungsschritt in einer Datenverarbeitungseinheit des mobilen Endgerätes und/oder des Fahrzeugs und/oder einer entfernten Datenzentrale vorgenommen werden. Zusätzlich oder alternativ können die in dem wenigstens einen Erfassungsschritt aufgenommenen Erfassungssignale des mobilen Endgerätes und/oder daraus abgeleitete Auswertedaten zur Durchführung des Ermittlungsschritts in einem Übermittlungsschritt über eine Kommunikationseinrichtung des mobilen Endgerätes, insbesondere über ein drahtloses Kommunikationsnetzwerk, als Übermittlungsdaten an eine Datenverarbeitungseinheit des Fahrzeugs und/oder einer entfernten Datenzentrale übermittelt werden.

Dabei kann insbesondere das oben bereits erwähnte Anreizsystem für Endgerätenutzer implementiert werden. So kann es vorgesehen sein, dass in Abhängigkeit von der erfolgreichen Verifikation der Übermittlungsdaten (insbesondere in Abhängigkeit von deren Authentizität und/oder Brauchbarkeit für die Analyse) in einem dem Übermittlungsschritt nachfolgenden Vergütungsschritt eine Vergütung für die Übermittlung der Übermittlungsdaten erfolgt. Beispielsweise kann der Nutzer des übermittelnden Endgeräts als Vergütung für die Übermittlung der Übermittlungsdaten eine Gutschrift auf sein Konto erhalten (beispielsweise sein Bankkonto oder ein Bonuspunktekonto beim Betreiber des Fahrzeugs oder bei einem Dritten). Diese Gutschrift kann der Nutzer dann beispielsweise dazu verwenden, Fahrkarten beim Betreiber des Fahrzeugs zu erwerben etc.

In diesem Zusammenhang ist es dann natürlich von Vorteil, wenn die Übermittlungsdaten (in der oben bereits beschriebenen Weise) entsprechend logisch abgesichert sind und zudem eine entsprechende (vorzugsweise einmalige und eindeutige) Identifikation des Endgeräts und/oder des Nutzers des Endgeräts umfassen.

Eine Verknüpfung der zur Auswertung gelangenden erfassten Daten mit einer ausreichend präzisen Identifikation des Endgeräts kann natürlich in jeglicher der oben genannten Varianten von Vorteil sein. So können hieraus Rückschlüsse auf die Eigenschaften des betreffenden Signalaufnehmers des Endgeräts gezogen werden, die dann bei der Auswertung berücksichtigt werden können. Hierbei muss es sich nicht zwingend um eine eindeutige und einmalige Identifikation des Endgeräts handeln, vielmehr kann schon eine Typnummer des Endgeräts oder dergleichen ausreichen, um hinreichende Rückschlüsse auf den betreffenden Signalaufnehmer ziehen zu können.

Bei bevorzugten Varianten der Erfindung kann in einem Reaktionsschritt eine Reaktion in Abhängigkeit von dem Wert des wenigstens einen Zustandsparameters erfolgen, der in dem Ermittlungsschritt ermittelt wurde. Hierbei kann es sich um eine beliebige Reaktion handeln, beispielsweise einen entsprechenden Hinweis an den Fahrzeugführer oder, in Abhängigkeit von der Bedeutung des erfassten Zustandes für die Sicherheit der Passagiere oder der Fahrzeugumgebung, auch um einen unmittelbaren, gegebenenfalls automatischen Eingriff in den Betrieb des Fahrzeugs (beispielsweise ein Verlangsamen oder vollständiges Abbremsen des Fahrzeugs bis zum Stillstand etc.).

Die vorliegende Erfindung betrifft weiterhin eine Anordnung zur Ermittlung eines Wertes wenigstens eines Zustandsparameters eines Schienenfahrzeugs und/oder einer Fahrstrecke eines Schienenfahrzeugs, welche sich insbesondere zur Durchführung des erfindungsgemäßen Verfahrens eignet. Die Anordnung umfasst ein Schienenfahrzeug, eine Erfassungseinrichtung und wenigstens eine Datenverarbeitungseinrichtung, wobei die Erfassungseinrichtung dazu ausgebildet ist, in wenigstens einem Erfassungsschritt wenigstens einen mit dem aktuellen Wert des Zustandsparameters korrelierten aktuellen ersten Erfassungssignal über einen ersten Signalaufnehmer an dem Schienenfahrzeug zu erfassen. Die Datenverarbeitungseinrichtung ist dazu ausgebildet, in einem Ermittlungsschritt den Wert des wenigstens einen Zustandsparameters unter Verwendung des aktuellen ersten Erfassungssignals der Erfassungseinrichtung aus wenigstens einem vorangegangenen Erfassungsschritt zu ermitteln. Die Erfassungseinrichtung ist ein erster Signalaufnehmer eines mobilen Endgerätes, das an einer Struktur im Inneren des Fahrzeugs an wenigstens einer Messposition und/oder in wenigstens einer Messorientierung angeordnet ist. Die Datenverarbeitungseinrichtung ist dazu ausgebildet, zur Ermittlung des Wertes des wenigstens einen Zustandsparameters einen Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, auszuwerten.

Die vorliegende Erfindung betrifft weiterhin ein mobiles Endgerät, insbesondere ein Mobiltelefon, welches sich insbesondere zur Durchführung des erfindungsgemäßen Verfahrens eignet. Das mobile Endgerät umfasst wenigstens einen ersten Signalaufnehmer und eine Datenverarbeitungseinrichtung, wobei der wenigstens eine erste Signalaufnehmer zur Erfassung wenigstens eines mit dem aktuellen Wert des Zustandsparameters korrelierten aktuellen ersten Erfassungssignals ausgebildet ist. Die Datenverarbeitungseinrichtung ist dazu ausgebildet, zur Ermittlung des Wertes des wenigstens einen Zustandsparameters ein Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, auszuwerten. Zusätzlich oder alternativ kann die Datenverarbeitungseinrichtung dazu ausgebildet sein, zur oder das aktuelle erste Erfassungssignal zur Ermittlung des Wertes des wenigstens einen Zustandsparameters mit in einer Form an eine weitere Datenverarbeitungseinrichtung auszugeben, welche die Auswertung eines Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, in der weiteren Datenverarbeitungseinrichtung ermöglicht.

Mit der erfindungsgemäßen Anordnung bzw. dem erfindungsgemäßen mobilen Endgerät lassen sich die oben im Zusammenhang mit dem erfindungsgemäßen Verfahren beschriebenen Varianten und Vorteile in demselben Maße realisieren, sodass insoweit auf die obigen Ausführungen verwiesen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt.

### KURZE BESCHREIBUNG DER ZEICHNUNGEN

- Figur 1: ist eine schematische Seitenansicht einer bevorzugten Ausführungsform des erfindungsgemäßen Anordnung mit einem Schienenfahrzeugs sowie mit einer bevorzugten Ausführungsform des erfindungsgemäßen mobilen Endgerätes, welche sich zur Durchführung eines bevorzugten Ausführungsbeispiels des erfindungsgemäßen Verfahrens eignen;
- Figur 2: ist eine schematische Ansicht des mobilen Endgerätes aus Figur 1.

### DETAILLIERTE BESCHREIBUNG DER ERFINDUNG

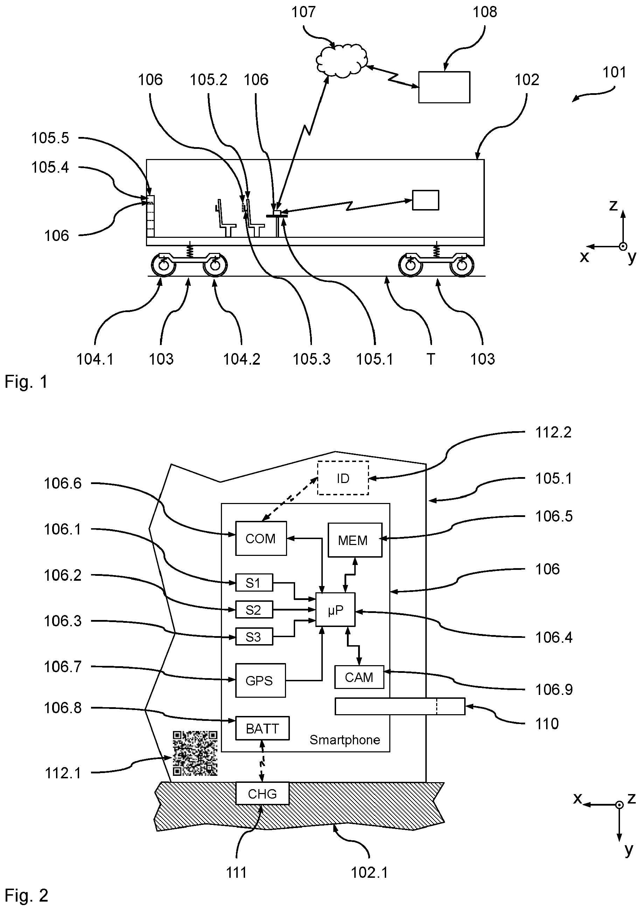

Im Folgenden wird unter Bezugnahme auf die Figuren 1 und 2 ein bevorzugtes Ausführungsbeispiel des erfindungsgemäßen Verfahrens anhand eines Schienenfahrzeugs 101 beschrieben. Bei dem Schienenfahrzeug 101 handelt es sich um einen Wagen eines Triebzugs, dessen Nennbetriebsgeschwindigkeit oberhalb von 180 km/h, nämlich bei vₙ = 200 km/h, liegt.

Das Fahrzeug 101 umfasst einen Wagenkasten 102, der im Bereich seiner beiden Enden in herkömmlicher Weise jeweils auf einer Fahrwerkseinheit in Form eines Drehgestells 103 mit zwei Radeinheiten in Form eines ersten Radsatzes 104.1 und eines zweiten Radsatzes 104.2 abgestützt ist. Es versteht sich jedoch, dass die vorliegende Erfindung auch in Verbindung mit anderen Konfigurationen eingesetzt werden kann, bei denen der Wagenkasten lediglich unmittelbar auf einem Fahrwerk abgestützt ist. Ebenso können anstelle von Radsätzen auch anderweitige Radeinheiten, wie beispielsweise Radpaare oder aber auch Einzelräder, vorgesehen sein.

Zum einfacheren Verständnis der nachfolgenden Erläuterungen ist in den Figuren ein (durch die Radaufstandsebene des Drehgestells 103 vorgegebenes) Fahrzeug-Koordinatensystem x,y,z angegeben, in dem die x-Koordinate die Fahrzeuglängsrichtung, die y-Koordinate die Fahrzeugquerrichtung und die z-Koordinate die Fahrzeughöhenrichtung des Schienenfahrzeugs 101 bezeichnen.

Bei dem Fahrzeug 101 handelt es sich um ein Fahrzeug zur Personenbeförderung, wobei im Inneren des Wagenkastens 102 eine (nicht näher dargestellte) Bestuhlung sowie an manchen Stellen Tische 105.1 für die Passagiere vorgesehen sind, die (im Wesentlichen starr) sowohl an der Wandstruktur 102.1 als auch an der Bodenstruktur 102.2 des Wagenkastens 102 befestigt sind.

Im vorliegenden Beispiel wird zur Ermittlung des aktuellen Verschleißzustandes bzw. Schädigungszustandes bestimmter Komponenten des Fahrzeugs 101 sowie der befahrenen Fahrstrecke T ein mobiles Endgerät in Form eines Smartphones 106 verwendet, welches auf den Tisch 105.1 aufgelegt und gegebenenfalls über eine Halterung bzw. Klemmeinrichtung in Form einer Klammer 110 an dem Tisch befestigt wird.

Das mobile Endgerät 106 weist eine Reihe von Signalaufnehmern auf, wobei insbesondere ein erster Signalaufnehmer in Form eines Beschleunigungssensors 106.1, ein zweiter Signalaufnehmer in Form eines Mikrofons 106.2 und ein dritter Signalaufnehmer in Form eines Drehratensensors 106.3 vorgesehen ist. Der Beschleunigungssensor 106.1 erfasst dabei im Betrieb als ein erstes Erfassungssignal S1 die auf das mobile Endgerät 106 wirkenden Beschleunigungen in allen drei Raumachsen bzw. Raumrichtungen (x, y, z), während das Mikrofon 106.2 als ein zweites Erfassungssignal S2 eine Aufnahme der Umgebungsgeräusche und der Drehratensensor 106.3 als ein drittes Erfassungssignal S3 die Drehraten um alle drei Raumachsen (x, y, z) erfasst.

Das mobile Endgerät 106 weist weiterhin eine erste Datenverarbeitungseinheit in Form eines Prozessors 106.4 auf, der auf einen Speicher 106.5 zugreift. In dem Speicher 106.5 sind sowohl Programme als auch Daten abgelegt, welche der Prozessor 106.4 im Betrieb des mobilen Endgeräts 106 verwendet.

Das mobile Endgerät 106 weist schließlich ein Kommunikationsmodul 106.6 sowie eine Positionsbestimmungseinrichtung in Form eines GPS-Moduls 106.7 auf. Über das Kommunikationsmodul 106.6 kann in herkömmlicher Weise, z. B. über ein drahtloses Kommunikationsnetz 107, ein Datenaustausch mit einer entfernten zweiten Datenverarbeitungseinheit in Form einer entfernten Datenzentrale 108 erfolgen. Ebenso kann aber auch über eine lokale drahtlose Datenverbindung (beispielsweise über ein WLAN oder eine Bluetoothverbindung etc.) eine Verbindung zu einer weiteren Datenverarbeitungseinheit 109 des Fahrzeugs 101 erfolgen.

Über das GPS-Modul 106.7 wird ebenfalls in herkömmlicher Weise eine aktuelle Positionsinformation des mobilen Endgeräts 106 ermittelt und an den Prozessor 106.4 übermittelt. Das GPS-Modul 106.7 kann ebenfalls in herkömmlicher Weise genutzt werden, um ein Zeiterfassungsmodul, wie eine interne Echtzeituhr des Prozessors 106.4 mit einer externen Zeitquelle zu synchronisieren. Ebenso kann die Synchronisation aber auch über das Mobilfunknetz 107 erfolgen.

In dem Speicher 106.5 ist unter anderem ein Messprogramm abgelegt, bei dessen Abarbeitung der Prozessor 106.4 die Signalaufnehmer 106.1 bis 106.3 anspricht, um in einem ersten Erfassungsschritt über die Signalaufnehmer 106.1 bis 106.3 die aktuellen Werte der Signale S1 bis S3 zu erfassen und als erste Messreihe MR1 in dem Speicher 106.5 abzulegen. Die Werte der Signale S1 bis S3 werden dabei mit einer Positionsinformation PI verknüpft gespeichert, welche aus dem Positionssignal des GPS-Moduls 106.7 abgeleitet wird, sowie einer Zeitinformation TI verknüpft gespeichert, die im Prozessor 106.4 generiert wird.

Bei bevorzugten Varianten der Erfindung können die Erfassungssignale S1 bis S3 zudem mit wenigstens einer für den aktuellen Betriebszustand des Fahrzeugs, insbesondere eine aktuelle Fahrgeschwindigkeit des Fahrzeugs, repräsentativen Betriebsinformation BI verknüpft gespeichert werden. Weiterhin werden die Erfassungssignale S1 bis S3 mit einer einmaligen und eindeutigen Kennung VID des Fahrzeugs 101 und mit einer für die Position des Endgeräts 106 innerhalb des Fahrzeugs 101 während des Erfassungsschritts repräsentativen Messpositionsinformation MPI verknüpft gespeichert. Hiermit ist es in vorteilhafter Weise möglich, auch diese Betriebsinformation BI, Fahrzeugidentifikation VID und Messpositionsinformation MPI neben der entsprechende Zeitinformation TI bzw. der Positionsinformation PI in die Analyse einfließen zu lassen. Dies ist insbesondere in Fällen hilfreich, in denen mehrere zeitlich aufeinanderfolgende Messreihen MR1 bis MRn analysiert werden.

Die Fahrzeugidentifikation VID erlaubt dabei eine schnelle Zuordnung der Erfassungssignale S1 bis S3 zum jeweiligen Fahrzeug 101, während die Messpositionsinformation MPI Rückschlüsse auf die Signalübertragung bzw. Übertragungsfunktion zwischen der Struktur des Fahrzeugs 101 und dem mobilen Endgerät 106 und damit insgesamt eine präzisere Analyse der Erfassungssignale S1 bis S3 ermöglicht.

Die Fahrzeugidentifikation bzw. Kennung VID des Fahrzeugs 101 und die Messpositionsinformation MPI wird in einem Erkennungsschritt in das Endgerät 106 eingegeben bzw. eingelesen. Im vorliegenden Beispiel erfolgt das Einlesen über eine Kamera 106.9, über welche der Nutzer des Endgeräts 106 einen Barcode 112.1 aufnimmt, der an dem Tisch 105.1 angebracht ist. Der Prozessor 106.4 des Endgeräts 106 nutzt dann ein in dem Speicher 106.5 abgelegtes Barcodescanner-Programm, um die Kennung VID des Fahrzeugs 101 und die Messpositionsinformation MPI aus dem aufgenommenen Barcode 112 zu extrahieren. Die Messpositionsinformation MPI bezeichnet dabei insbesondere genaue Lage des Tisches 105.1 innerhalb des Fahrzeugs 101.

Alternativ kann die Fahrzeugidentifikation VID und die Messpositionsinformation MPI aber auch gegebenenfalls automatisch beim Befestigen des Endgeräts 106 am Tisch 105.1 erfolgen. Beispielsweise kann die entsprechende Information VID, MPI drahtlos über eine so genannte Nahfeldkommunikation (NFC), von dem Kommunikationsmodul 106.6 aus einem beispielsweise am Tisch 105.1 angebrachten Speicher 112.2 ausgelesen werden. Dies ausgelöst durch den Nutzer des Endgeräts 106 oder auch automatisch, beispielsweise bei ausreichender Annäherung an den Speicher 112.2 oder durch einen entsprechenden (nicht dargestellten) Schalter am Tisch 105.1 erfolgen.

Im vorliegenden Beispiel werden die mit der Positionskennung PI, der Zeitkennung TI, der Fahrzeugidentifikation VID und der Messpositionsinformation MPI aufbereiteten Signale S1 bis S3 der ersten Messreihe MR1 als Übermittlungsdaten TMD dann über das Mobilfunknetz 107 an die entfernte Datenzentrale 108 übermittelt.

Hierbei werden die zu den Übermittlungsdaten TMD aufbereiteten Signale S1 bis S3 der ersten Messreihe MR1 von dem Prozessor 106.4 (unter Zugriff auf entsprechende kryptographische Programme im Speicher 106.5) in einer gegen unerkannte Manipulation abgesicherten Weise gespeichert und weitergeleitet. Hierzu können beliebige geeignete kryptographische Verfahren bzw. Mechanismen angewendet werden. Im vorliegenden Beispiel werden die aufbereiteten Signale S1 bis S3 der ersten Messreihe MR1 mit einer einmaligen eindeutigen Identifikation SID des Endgeräts 106 verknüpft und mit einer digitalen Signatur SIG des Endgeräts 106 versehen. Eine solche logische Absicherung der erfassten und/oder weiterverarbeiteten Daten ist insbesondere im Hinblick auf eine zuverlässige und manipulationssichere Analyse des Fahrzeugs 101 und des Fahrwegs des Fahrzeugs 101 von Vorteil.

Zudem ist es über die Identifikation SID des Endgeräts 106 möglich, bei der späteren Analyse der Übermittlungsdaten TMD Rückschlüsse auf die Lage und/oder Eigenschaften der in dem Endgerät 106 verbauten Signalaufnehmer 106.1 bis 106.3 zu schließen, und diese Information gegebenenfalls in die Analyse mit einfließen zu lassen. Es versteht sich hierbei, dass bei anderen Varianten hierzu auch eine weniger präzise Information über das Endgerät 106 ausreichen kann. Beispielsweise kann zu diesem Zweck eine Typnummer des Endgeräts ausreichen.

In der Datenzentrale 108 erfolgt dann eine Analyse der aufbereiteten Signale S1 bis S3 der ersten Messreihe MR1, um hieraus Rückschlüsse auf den aktuellen Verschleißzustand bzw. Schädigungszustand bestimmter Komponenten des Fahrzeugs 101 bzw. Fahrwegs T zu ziehen. Hierbei wird der Umstand genutzt, dass die Sensoren 106.1 bis 106.3 eines solchen mobilen Endgeräts 106 typischerweise Signale S1 bis S3 mit ausreichender Frequenzauflösung generieren, welche eine Auswertung der Signale S1 bis S3 in höheren Frequenzbereichen oberhalb von 1 Hz bis 2 Hz, vorzugsweise oberhalb von 4 Hz, ermöglicht.

Gerade in diesen höheren Frequenzbereichen liegen die Systemantworten des Fahrzeugs 101 (wie beispielsweise die mechanischen und/oder akustischen Schwingungen), welche für die Analyse des Verschleißzustandes bzw. Schädigungszustandes bestimmter Komponenten des Fahrzeugs 101 bzw. des Fahrwegs T relevant sind. Dabei erlaubt die zeitgleiche Erfassung mehrerer unterschiedlicher Signale S1 bis S3, deren kombinierte Auswertung und damit eine zuverlässigere Bewertung des Verschleißzustandes bzw. Schädigungszustandes der betreffenden Komponente des Fahrzeugs 101 bzw. des Fahrwegs T.

So sind bestimmten Verschleißzuständen bzw. Schädigungen der einzelnen Fahrzeugkomponente bzw. des Fahrwegs T typischerweise charakteristische Schwingungsmuster zugeordnet, welche bei der Analyse berücksichtig werden. Gerade die Analyse mehrerer, gleichzeitig aufgenommener Signale S1 bis S3 erlaubt dabei eine verbesserte Identifikation des aktuellen Zustands bzw. eines hierfür repräsentativen Zustandsparameters der betreffenden Komponente des Fahrzeugs 101 bzw. Fahrwegs T, da bestimmte Schwingungsmuster eines Signals (z. B. des Signals S1) mehreren unterschiedlichen Zuständen einer oder mehrerer Komponenten des Fahrzeugs 101 bzw. des Fahrwegs T zugeordnet sein können, die gleichzeitig aufgenommenen Schwingungsmuster wenigstens eines weiteren Signals (z. B. des Signals S2 und/oder S3) die Zuordnung zu einem bestimmten Zustand einer Komponente des Fahrzeugs 101 bzw. des Fahrwegs T ermöglichen.

Im vorliegenden Beispiel erfolgt in der Datenzentrale 108 daher eine Auswertung der Signale S1 bis S3 bzw. eine Ermittlung des Wertes des wenigstens einen Zustandsparameters des Fahrzeugs 101 bzw. des Fahrwegs in einem Frequenzbereich oberhalb von 1 Hz bis 2 Hz, vorzugsweise von 4 Hz bis 15 kHz, weiter vorzugsweise von 10 Hz bis 1 kHz.

Im vorliegenden Beispiel werden die Signale S1 und S3 bei der Schwingungsanalyse von Federungskomponenten der Fahrwerke 103 bevorzugt im Frequenzbereich von 1 Hz bis 10 Hz, vorzugsweise von 1 Hz bis 4 Hz, weiter vorzugsweise von 1 Hz bis 2 Hz, untersucht. Weiterhin werden zur mechanischen Schwingungsanalyse der Fahrzeugstrukturen die Signale S1 und S3 jeweils in einem Frequenzbereich von 2 Hz bis 50 Hz, vorzugsweise von 4 Hz bis 40 Hz, weiter vorzugsweise von 5 Hz bis 30 Hz, untersucht. Demgegenüber wird das Signal S2 zur akustischen Analyse in einem Frequenzbereich von 10 Hz bis 20 kHz, vorzugsweise von 50 Hz bis 10 kHz, weiter vorzugsweise von 100 Hz bis 1 kHz, untersucht.

Im vorliegenden Beispiel wird das mobile Endgerät 106 an dem Tisch 105.1 als einer Struktur im Inneren des Fahrzeugs 101, an der das entsprechende Signal S1 bis S3 abgegriffen bzw. aufgenommen werden kann. Hierfür eignen sich grundsätzlich beliebige Strukturen innerhalb des Fahrzeugs 101, solange die signaltechnische Kopplung (mithin also die Übertragungsfunktion) zwischen der Struktur (wie dem Tisch 105.1) und der (für die Zustandsanalyse) interessierenden Fahrzeugkomponente bzw. dem Fahrweg T in hinreichendem Umfang bekannt ist.

Es versteht sich jedoch, dass als Struktur im Inneren des Fahrzeugs 101 auch eine andere Ablageeinrichtung, insbesondere eine Gepäckablage, verwendet werden kann. Zusätzlich oder alternativ kann die Struktur im Inneren des Fahrzeugs die Wandeinrichtung, insbesondere die Seitenwand 102.1, oder der Boden 102.2 sein, wobei das mobile Endgerät 106 dann für den Erfassungsschritt mit der Wandeinrichtung 102.1 bzw. dem Boden 102.2 verbunden wird. Ebenso ist es möglich, eine Ablageeinrichtung eines Sitzes 105.2 zu nutzen oder eine an dem Sitz 105.2 angeordnete Halterung 105.3 für das mobile Endgerät 106 zu verwenden. Schließlich kann es sich bei der Ablageeinrichtung auch um ein bevorzugt abschließbar gestaltetes Fach 105.4 in einem mit der Fahrzeugstruktur verbundenen Schrank 105.5 im Fahrzeug 101 handeln, welches dann bevorzugt eine entsprechende Halterung für das mobile Endgerät 106 aufweist.

Es versteht sich, dass die vorbeschriebene Verfahrensweise zum Einlesen der Fahrzeugidentifikation VID und der Messpositionsinformation MPI dann natürlich nicht nur bei dem Tisch 105.1 zur Anwendung kommen kann, sondern natürlich auch bei den anderen beschriebenen Varianten zur Anbringung des Endgeräts, also beispielsweise bei der Halterung 105.3 des Sitzes 105.2 oder in dem Fach 105.4 ebenso wie ein beliebiger anderer Stelle im Fahrzeug 101.

Im vorliegenden Beispiel kann das mobile Endgerät 106 für den Erfassungsschritt gegebenenfalls auch einfach nur auf den Tischen 105.1 aufgelegt werden. Bevorzugt wird das mobile Endgerät für den Erfassungsschritt wie beschrieben über die Halterung bzw. Klemmeinrichtung 110 fest, insbesondere im Wesentlichen starr, mit dem Tisch 105.1 (bzw. der betreffenden Struktur im Inneren des Fahrzeugs 101) verbunden werden, wodurch insbesondere eine hinreichend definierte Signalübertragung bzw. Übertragungsfunktion zwischen der betreffenden Struktur (z. B. dem Tisch 105.1) und dem mobilen Endgerät 106 sichergestellt ist.

Besonders günstig ist es, wenn die Halterung bzw. Klemmeinrichtung 110 einer Ladeeinrichtung 111 für die Stromversorgung des Endgeräts räumlich zugeordnet ist. Dabei ist es natürlich besonders komfortabel und damit vorteilhaft, wenn es sich um eine (beispielsweise induktive) Ladeeinrichtung 111 handelt, welche gegebenenfalls auch ein kabelloses Aufladen des Akkumulators 106.8 des Endgerätes 106 ermöglicht.

Für die Analyse des aktuellen Verschleißzustandes bzw. Schädigungszustandes der interessierenden Komponente des Fahrzeugs 101 bzw. des Fahrwegs T kann es grundsätzlich ausreichen, eine Messreihe MR1 aus einem Erfassungsschritt zu analysieren. Hierbei kann es sich beispielsweise um eine Messreihe handeln, welche bei einem einmaligen Überfahren eines bestimmten Streckenabschnitts aufgenommen wurde.

Bevorzugt können mehrere Messreihen MR1 bis MRn aufgenommen und für die Analyse herangezogen werden. In diesen Fällen kann das mobile Endgerät 106 grundsätzlich stets in derselben Messposition und/oder Messorientierung mit der Struktur im Inneren des Fahrzeugs 101 (z. B. dem Tisch 105.1) verbunden sein. Um aussagekräftigere Ergebnisse zu erzielen bzw. das Risiko unerkannter Fehlfunktionen einzelner Sensoren 106.1 bis 106.3 zu reduzieren, kann jedoch auch vorgesehen sein, dass das mobile Endgerät 106 für einen ersten Erfassungsschritt bzw. eine erste Messreihe MR1 bei einem ersten Durchfahren eines vorgebbaren Streckenabschnitts der Fahrstrecke T in einer vorgebbaren ersten Messposition und/oder Messorientierung mit der Struktur im Inneren des Fahrzeugs 101 (z. B. dem Tisch 105.1) verbunden wird, während das mobile Endgerät 106 für einen zweiten Erfassungsschritt bzw. eine zweite Messreihe MR2 bei einem zweiten Durchfahren des vorgebbaren Streckenabschnitts in einer vorgebbaren zweiten Messposition und/oder Messorientierung mit der Struktur im Inneren des Fahrzeugs 101 (z. B. dem Tisch 105.1) verbunden wird.

Bevorzugt wird daher in einem Ermittlungsschritt der Analyse in der Datenzentrale der Wert des wenigstens einen Zustandsparameters unter Verwendung der Erfassungssignale S1 bis S3 aus einem oder mehreren vorangegangenen Erfassungsschritten bzw. einer oder mehreren vorangegangenen Messreihe MR2 bis MRn ermittelt. Hiermit ist es in einfacher Weise möglich, die Historie der Erfassungssignale S1 bis S3, mithin also auch des Verschleißzustandes bzw. Schädigungszustandes der interessierenden Komponente des Fahrzeugs 101 bzw. des Fahrwegs T, bei der Analyse zu berücksichtigen.

Bevorzugt wird bei der Analyse des Verschleißzustandes bzw. Schädigungszustandes der interessierenden Komponente des Fahrzeugs 101 bzw. des Fahrwegs T ein Vergleich zwischen einem hinreichend bekannten vorherigen Zustand und dem aktuellen Zustand vorgenommen, wie er sich aus der aktuellen Messung bzw. Messreihen MR1 ergibt, da hierdurch insbesondere zuverlässige Rückschlüsse auf der Zustandsänderung zugrundeliegende Verschleißmechanismen bzw. Schädigungsmechanismen gezogen werden können.

Der Vergleichszustand kann grundsätzlich auf beliebige Weise, insbesondere rechnerisch und/oder über entsprechende Vergleichsmessungen an dem Fahrzeug 101 selbst oder einem Vergleichsfahrzeug erfasst worden sein. Bei bestimmten Varianten wird der Wert des wenigstens einen Zustandsparameters in dem Ermittlungsschritt unter Verwendung von Vergleichserfassungssignalen VS1 bis VS3 aus wenigstens einem vorangegangenen Vergleichserfassungsschritt bzw. wenigstens einer vorangegangenen Messreihe MR2 bis MRn ermittelt. Dabei kann der Wert des wenigstens einen Zustandsparameters in dem Ermittlungsschritt unter Verwendung der aktuellen ersten Erfassungssignale aus einer Mehrzahl von vorangegangenen Erfassungsschritten bzw. Messreihen MR2 bis MRn und einer Mehrzahl von Vergleichserfassungssignalen aus einer Mehrzahl von vorangegangenen Vergleichserfassungsschritten VS1 bis VS3 ermittelt werden.

Dabei kann vorgesehen sein, dass der wenigstens eine Vergleichserfassungsschritt (mit den Vergleichserfassungssignalen VS1 bis VS3) über das mobile Endgerät 106 an dem Fahrzeug 101 selbst in einem bekannten Zustand, insbesondere in einem Neuzustand oder einem Wartungszustand, durchgeführt wurde, in dem ein definierter Wert des wenigstens einen Zustandsparameters gegeben ist.

Bei anderen Varianten mit rechnerisch ermittelten Vergleichswerten kann der Wert des wenigstens einen Zustandsparameters in dem Ermittlungsschritt unter Verwendung von wenigstens einem Vergleichsmodellwert VM1 bis VM3 ermittelt werden, der seinerseits aus einem Vergleichsmodell des Fahrzeugs 101 ermittelt wurde. Dabei kann vorgesehen sein, dass das Vergleichsmodell mit den Vergleichsmodellwerten VM1 bis VM3 jeweils den erwarteten Wert des jeweiligen Erfassungssignales S1 bis S3 zum Zeitpunkt der Erfassung des aktuellen Erfassungssignales S1 bis S3 liefert.

Grundsätzlich können für die unterschiedlichen Erfassungssignale S1 bis S3 unterschiedliche Frequenzen bzw. Frequenzbereiche herangezogen werden, insbesondere je nachdem, in welchem Frequenzbereich sich der Verschleiß bzw. die Schädigung auf das jeweilige Erfassungssignal S1 bis S3 auswirkt. Es kann zur Ermittlung des Wertes des wenigstens einen Zustandsparameters jedoch auch im Wesentlichen derselbe Frequenzbereich des jeweiligen aktuellen Erfassungssignals S1 bis S3 ausgewertet werden.

Im vorliegenden Beispiel können beliebige Komponenten des Fahrzeugs 101 Gegenstand der Analyse sein. Dabei kann die Fahrzeugkomponente eine Komponente eines Drehgestells103 und/oder eine Komponente einer Antriebseinrichtung des Fahrzeugs 101 und/oder eine Komponente einer Hilfsbetriebseinrichtung des Fahrzeugs 101, insbesondere einer Klimaanlage und/oder eines Kompressors des Fahrzeugs 101, sein.

Bei bestimmten Varianten der Erfindung kann die Analyse in dem Ermittlungsschritt weiterhin unter Verwendung der Positionsinformation und von einer für den Zustand der befahrenen Fahrstrecke repräsentativen Streckeninformation (an dem der Positionsinformation PI entsprechenden Ort) ermittelt werden. Dies hat den Vorteil, dass mit der Streckeninformation der Anteil bzw. Beitrag der Fahrstrecke T zur erfassten Signalantwort des Fahrzeugs 101 abgeschätzt bzw. berücksichtigt werden kann.

Weiterhin kann der Wert des betreffenden Zustandsparameters einer Komponente des Fahrzeugs 101 in dem Ermittlungsschritt unter Verwendung der Positionskennung bzw. Positionsinformation PI und von Erfassungssignalen S1 bis S3 aus einer Mehrzahl von Überfahrten des Fahrzeugs 101 (bzw. entsprechenden Messreihen MR1 bis MRn) über einen vorgebbaren Streckenabschnitt der Fahrstrecke T ermittelt werden. Hiermit kann anhand der Veränderung der erfassten Signalantwort des Fahrzeugs 101 zwischen den Überfahrten des Fahrzeugs 101 mit höherer Zuverlässigkeit auf den tatsächlichen Verschleißzustand bzw. Schädigungszustand der Komponente des Fahrzeugs 101 geschlossen werden.

Bei weiteren Varianten der Erfindung kann der Wert eines Zustandsparameters der Fahrstrecke T in dem Ermittlungsschritt dann unter Verwendung der Positionskennung bzw. Positionsinformation PI und von Erfassungssignalen S1 bis S3 aus einer Mehrzahl von Überfahrten des Fahrzeugs 101 über einen vorgebbaren Streckenabschnitt der Fahrstrecke und/oder aus Überfahrten einer Mehrzahl von unterschiedlichen Fahrzeugen 101 über einen vorgebbaren Streckenabschnitt der Fahrstrecke T ermittelt werden. Hiermit kann anhand der Veränderung der erfassten Signalantwort des betreffenden Fahrzeugs 101 zwischen den Überfahrten des betreffenden Fahrzeugs 101 mit höherer Zuverlässigkeit auf den tatsächlichen Verschleißzustand bzw. Schädigungszustand der Strecke T geschlossen werden. Gleiches gilt für ähnliche Signalantworten unterschiedlicher Fahrzeuge 101 an derselben Position.

Im vorliegenden Beispiel erfolgt die Analyse der erfassten Daten bzw. Messreihen MR1 bis MRn in der entfernten Datenzentrale 108. Es kann jedoch auch vorgesehen sein, dass die Analyse (also der Ermittlungsschritt) zusätzlich oder alternativ in dem Prozessor 106.4 des mobilen Endgerätes 106 und/oder in der Datenverarbeitungseinheit 109 des Fahrzeugs 101 vorgenommen wird.

Im vorliegenden Beispiel kann in einem Reaktionsschritt eine Reaktion in Abhängigkeit von dem Ergebnis der Analyse erfolgen, mithin also in Abhängigkeit von dem Wert des wenigstens einen Zustandsparameters, der in dem Ermittlungsschritt ermittelt wurde. Hierbei kann es sich um eine beliebige Reaktion handeln, beispielsweise einen entsprechenden Hinweis an den Fahrzeugführer des Fahrzeugs 101 oder, in Abhängigkeit von der Bedeutung des erfassten Zustandes für die Sicherheit der Passagiere oder der Fahrzeugumgebung, auch um einen unmittelbaren, gegebenenfalls automatischen Eingriff in den Betrieb des Fahrzeugs 101 (beispielsweise ein Verlangsamen oder vollständiges Abbremsen des Fahrzeugs bis zum Stillstand etc.).

Im vorliegenden Beispiel kann weiterhin in vorteilhafter Weise ein Anreizsystem für Endgerätenutzer implementiert werden. So kann vorgesehen sein, dass in Abhängigkeit von der erfolgreichen Verifikation der Übermittlungsdaten TMD (insbesondere in Abhängigkeit von deren Authentizität und/oder Brauchbarkeit für die Analyse) in einem dem Übermittlungsschritt nachfolgenden Vergütungsschritt eine Vergütung für die Übermittlung der Übermittlungsdaten TMD erfolgt. Beispielsweise kann der Nutzer des übermittelnden Endgeräts 106 als Vergütung für die Übermittlung der Übermittlungsdaten TMD eine Gutschrift auf sein Konto erhalten (beispielsweise sein Bankkonto oder ein Bonuspunktekonto beim Betreiber des Fahrzeugs oder bei einem Dritten). Diese Gutschrift kann der Nutzer dann beispielsweise dazu verwenden, Fahrkarten beim Betreiber des Fahrzeugs 101 zu erwerben etc.

In diesem Zusammenhang ist es dann natürlich von Vorteil, wenn die Übermittlungsdaten TMD in der oben bereits beschriebenen Weise über die digitale Signatur SIG entsprechend logisch abgesichert sind und zudem über die einmalige und eindeutige Identifikation SID des Endgeräts 106 dem Endgerät 106 und damit dem Nutzer des Endgeräts 106 eindeutig uns manipulationssicher zuzuordnen sind.

Die vorliegende Erfindung wurde vorstehend ausschließlich anhand von Beispielen beschrieben, bei denen die Erfassungssignale S1 und S3 in allen drei Raumrichtungen (x, y, z) ausgewertet wurden. Es versteht sich jedoch, dass die Erfindung auch im Zusammenhang Erfassungssignalen zum Einsatz kommen kann, bei denen weniger oder nur einzelne der drei Raumrichtungen (x, y, z) ausgewertet werden, wenn hieraus alleine schon aussagekräftige Rückschlüsse gezogen werden können.

Die vorliegende Erfindung wurde vorstehend ausschließlich anhand von Beispielen beschrieben, bei denen drei Erfassungssignale S1 bis S3 ausgewertet wurden. Es versteht sich jedoch, dass die Erfindung auch im Zusammenhang mit einer beliebigen anderen Anzahl von Erfassungssignalen zum Einsatz kommen kann. Insbesondere kann es gegebenenfalls ausreichen, ein einziges Erfassungssignal (z.B. nur eines der Signale S1 bis S3) auszuwerten, wenn aus diesem alleine schon aussagekräftige Rückschlüsse gezogen werden können.

Die vorliegende Offenbarung betrifft weiterhin die nachfolgend beschriebenen Gestaltungsvarianten. So betrifft eine erste Variante ein Verfahren zur Ermittlung eines Wertes wenigstens eines Zustandsparameters eines Schienenfahrzeugs und/oder einer Fahrstrecke eines Schienenfahrzeugs, bei dem in wenigstens einem Erfassungsschritt wenigstens ein mit dem aktuellen Wert des Zustandsparameters korreliertes aktuelles erstes Erfassungssignal über einen ersten Signalaufnehmer an einer Struktur im Inneren des Schienenfahrzeugs erfasst wird, wobei zur Erfassung des aktuellen ersten Erfassungssignals ein erster Signalaufnehmer eines mobilen Endgerätes verwendet wird, wobei zur Ermittlung des Wertes des wenigstens einen Zustandsparameters ein Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, ausgewertet wird.

Eine zweite Variante betrifft ein Verfahren gemäß der ersten Variante, wobei als mobiles Endgerät ein Mobiltelefon, insbesondere ein Smartphone, verwendet wird oder als mobiles Endgerät ein Tablet-Computer verwendet wird oder als mobiles Endgerät ein mobiles Navigationsgerät verwendet wird oder als mobiles Endgerät eine SmartWatch verwendet wird.

Eine dritte Variante betrifft ein Verfahren gemäß der ersten oder zweiten Variante, wobei als Signalaufnehmer wenigstens ein Beschleunigungssensor des mobilen Endgerätes verwendet wird und/oder als Signalaufnehmer wenigstens ein Drehratensensor des mobilen Endgerätes verwendet wird und/oder als Signalaufnehmer wenigstens ein Mikrofon des mobilen Endgerätes verwendet wird und/oder als Signalaufnehmer wenigstens eine Kamera des mobilen Endgerätes verwendet wird und/oder als Signalaufnehmer wenigstens ein Temperatursensor des mobilen Endgerätes und/oder wenigstens ein Magnetfeldsensor des mobilen Endgerätes verwendet wird.

Eine vierte Variante betrifft ein Verfahren gemäß einer der ersten bis dritten Variante, wobei die Struktur im Inneren des Fahrzeugs eine Ablageeinrichtung, insbesondere eine Gepäckablage und/oder ein Tisch und/oder eine Ablage eines Sitzes und/oder ein, insbesondere verschließbares, Fach des Fahrzeugs, ist und das mobile Endgerät für den Erfassungsschritt mit der Ablageeinrichtung verbunden wird, insbesondere auf die Ablageeinrichtung aufgelegt wird, und/oder die Struktur im Inneren des Fahrzeugs eine Wandeinrichtung, insbesondere eine Seitenwand, ist und das mobile Endgerät für den Erfassungsschritt mit der Wandeinrichtung verbunden wird, und/oder das mobile Endgerät für den Erfassungsschritt fest, insbesondere im Wesentlichen starr, mit der Struktur im Inneren des Fahrzeugs verbunden wird, und/oder das mobile Endgerät für den Erfassungsschritt mittels einer Klemmeinrichtung mit der Struktur im Inneren des Fahrzeugs verbunden wird, und/oder das mobile Endgerät für den Erfassungsschritt mittels einer Halterung mit der Struktur im Inneren des Fahrzeugs verbunden wird, wobei die Halterung insbesondere in einem Fach des Fahrzeugs angeordnet wird, wobei das Fach insbesondere verschließbar ausgebildet ist, und/oder die Halterung insbesondere einer Ladeeinrichtung für das Endgerät räumlich zugeordnet wird, und/oder das mobile Endgerät für einen ersten Erfassungsschritt bei einem ersten Durchfahren eines vorgebbaren Streckenabschnitts der Fahrstrecke in einer vorgebbaren ersten Messposition und/oder Messorientierung mit der Struktur im Inneren des Fahrzeugs verbunden wird und das mobile Endgerät für einen zweiten Erfassungsschritt bei einem zweiten Durchfahren des vorgebbaren Streckenabschnitts in einer vorgebbaren zweiten Messposition und/oder Messorientierung mit der Struktur im Inneren des Fahrzeugs verbunden wird.

Eine fünfte Variante betrifft ein Verfahren gemäß einer der ersten bis vierten Variante, wobei in einem Ermittlungsschritt der Wert des wenigstens einen Zustandsparameters unter Verwendung des aktuellen ersten Erfassungssignals aus wenigstens einem vorangegangenen Erfassungsschritt ermittelt wird, wobei in dem Ermittlungsschritt der Wert des wenigstens einen Zustandsparameters insbesondere unter Verwendung der aktuellen ersten Erfassungssignale aus einer Mehrzahl von vorangegangenen Erfassungsschritten ermittelt wird.

Eine sechste Variante betrifft ein Verfahren gemäß der fünften Variante, wobei der Wert des wenigstens einen Zustandsparameters in dem Ermittlungsschritt unter Verwendung von wenigstens einem Vergleichserfassungssignal aus wenigstens einem vorangegangenen Vergleichserfassungsschritt ermittelt wird, wobei der Wert des wenigstens einen Zustandsparameters in dem Ermittlungsschritt insbesondere unter Verwendung der aktuellen ersten Erfassungssignale aus einer Mehrzahl von vorangegangenen Erfassungsschritten und einer Mehrzahl von Vergleichserfassungssignalen aus einer Mehrzahl von vorangegangenen Vergleichserfassungsschritten ermittelt wird, und/oder der wenigstens eine Vergleichserfassungsschritt insbesondere an dem Fahrzeug durchgeführt wurde oder an einem Vergleichsfahrzeug durchgeführt wurde, welches dem Fahrzeug zumindest nach dem Fahrzeugtyp entspricht, und/oder der wenigstens eine Vergleichserfassungsschritt insbesondere an dem Fahrzeug in einem bekannten Zustand, insbesondere in einem Neuzustand oder einem Wartungszustand, durchgeführt wurde, in dem ein definierter Wert des wenigstens einen Zustandsparameters gegeben ist.

Eine siebte Variante betrifft ein Verfahren gemäß der fünften oder sechsten Variante, wobei der Wert des wenigstens einen Zustandsparameters in dem Ermittlungsschritt unter Verwendung von wenigstens einem Vergleichsmodellwert ermittelt wird, der aus einem Vergleichsmodell des Fahrzeugs ermittelt wurde, wobei das Vergleichsmodell insbesondere wenigstens einen erwarteten Wert des ersten Erfassungssignales zum Zeitpunkt der Erfassung des wenigstens einen aktuellen ersten Erfassungssignales liefert.

Eine achte Variante betrifft ein Verfahren gemäß einer der ersten bis siebten Variante, wobei in dem wenigstens einen Erfassungsschritt wenigstens ein mit dem aktuellen Wert des wenigstens einen Zustandsparameters korreliertes aktuelles zweites Erfassungssignal über einen zweiten Signalaufnehmer an dem Schienenfahrzeug erfasst wird und in dem Ermittlungsschritt der Wert des wenigstens einen Zustandsparameters unter Verwendung des aktuellen ersten Erfassungssignals und des aktuellen zweiten Erfassungssignals aus wenigstens einem vorangegangenen Erfassungsschritt, insbesondere aus einer Mehrzahl von vorangegangenen Erfassungsschritten, ermittelt wird, wobei zur Erfassung des aktuellen zweiten Erfassungssignals insbesondere ein zweiter Signalaufnehmer des mobilen Endgerätes verwendet wird, und/oder zur Ermittlung des Wertes des wenigstens einen Zustandsparameters insbesondere ein Frequenzbereich des aktuellen zweiten Erfassungssignals oberhalb von 1 Hz bis 2 Hz, vorzugsweise von 4 Hz bis 15 kHz, weiter vorzugsweise von 10 Hz bis 1 kHz, ausgewertet wird, und/oder zur Ermittlung des Wertes des wenigstens einen Zustandsparameters insbesondere im Wesentlichen derselbe Frequenzbereich des aktuellen ersten und zweiten Erfassungssignals ausgewertet wird, und/oder als erster Signalaufnehmer insbesondere wenigstens ein Beschleunigungssensor und/oder wenigstens ein Drehratensensor des mobilen Endgerätes verwendet wird und als zweiter Signalaufnehmer insbesondere wenigstens ein Mikrofon des mobilen Endgerätes verwendet wird.

Eine neunte Variante betrifft ein Verfahren gemäß einer der ersten bis achten Variante, wobei der Wert des wenigstens einen Zustandsparameters für einen Zustand, insbesondere einen Verschleißzustand und/oder einen Integritätszustand wenigstens einer Fahrzeugkomponente des Fahrzeugs repräsentativ ist, wobei die Fahrzeugkomponente insbesondere eine Komponente eines Fahrwerks des Fahrzeugs ist und/oder die Fahrzeugkomponente insbesondere eine Komponente einer Antriebseinrichtung des Fahrzeugs ist und/oder die Fahrzeugkomponente insbesondere eine Komponente einer Hilfsbetriebseinrichtung des Fahrzeugs, insbesondere einer Klimaanlage und/oder eines Kompressors des Fahrzeugs, ist.

Eine zehnte Variante betrifft ein Verfahren gemäß einer der ersten bis neunten Variante, wobei das erste Erfassungssignal mit einer für den Zeitpunkt seiner Erfassung repräsentativen Zeitkennung und/oder mit einer für die aktuelle Position des Fahrzeugs und/oder des Endgeräts repräsentativen Positionskennung und/oder mit wenigstens einer für den aktuellen Betriebszustand des Fahrzeugs, insbesondere eine aktuelle Fahrgeschwindigkeit des Fahrzeugs, repräsentativen Betriebsinformation, und/oder mit einer Kennung des Fahrzeugs, insbesondere einmaligen und eindeutigen Kennung des Fahrzeugs, und/oder mit einer für die Position des Endgeräts innerhalb des Fahrzeugs während des Erfassungsschritts repräsentativen Messpositionsinformation verknüpft gespeichert wird, wobei der Wert des wenigstens einen Zustandsparameters in dem Ermittlungsschritt insbesondere unter Verwendung der Positionskennung und von einer für den Zustand der befahrenen Fahrstrecke repräsentativen Streckeninformation ermittelt wird, und/oder der wenigstens eine Zustandsparameter insbesondere ein Zustandsparameter des Fahrzeugs ist und der Wert des wenigstens einen Zustandsparameters in dem Ermittlungsschritt unter Verwendung der Positionskennung und von ersten Erfassungssignalen aus einer Mehrzahl von Überfahrten des Fahrzeugs über einen vorgebbaren Streckenabschnitt der Fahrstrecke ermittelt wird, und/oder der wenigstens eine Zustandsparameter insbesondere ein Zustandsparameter der Fahrstrecke ist und der Wert des wenigstens einen Zustandsparameters in dem Ermittlungsschritt unter Verwendung der Positionskennung und von ersten Erfassungssignalen aus einer Mehrzahl von Überfahrten des Fahrzeugs über einen vorgebbaren Streckenabschnitt der Fahrstrecke und/oder aus Überfahrten einer Mehrzahl von unterschiedlichen Fahrzeugen über einen vorgebbaren Streckenabschnitt der Fahrstrecke ermittelt wird, und/oder das erste Erfassungssignal in einer gegen Manipulation abgesicherten Weise, insbesondere in einer gegen unerkannte Manipulation abgesicherten Weise, gespeichert wird, insbesondere verschlüsselt wird und/oder mit einer digitalen Signatur versehen wird, und/oder die Kennung des Fahrzeugs und/oder die Messepositionsinformation in einem Erkennungsschritt über eine Eingabeeinrichtung, insbesondere eine drahtlose Kommunikationseinrichtung und/oder einen Barcodescanner, insbesondere automatisch bei Betreten des Fahrzeugs und/oder bei Verbinden des Endgeräts mit einer Halterung des Fahrzeugs, in das Endgerät eingegeben wird.

Eine elfte Variante betrifft ein Verfahren gemäß einer der ersten bis zehnten Variante, wobei der Ermittlungsschritt in einer Datenverarbeitungseinheit des mobilen Endgerätes und/oder des Fahrzeugs und/oder einer entfernten Datenzentrale vorgenommen wird und/oder die in dem wenigstens einen Erfassungsschritt aufgenommenen Erfassungssignale des mobilen Endgerätes und/oder daraus abgeleitete Auswertedaten zur Durchführung des Ermittlungsschritts über eine Kommunikationseinrichtung des mobilen Endgerätes in einem Übermittlungsschritt, insbesondere über ein drahtloses Kommunikationsnetzwerk, an eine Datenverarbeitungseinheit des Fahrzeugs und/oder einer entfernten Datenzentrale als Übermittlungsdaten übermittelt werden, wobei in einem dem Übermittlungsschritt nachfolgenden Vergütungsschritt insbesondere eine Vergütung für die Übermittlung der Übermittlungsdaten erfolgt, und/oder in einem Reaktionsschritt eine Reaktion in Abhängigkeit von dem Wert des wenigstens einen Zustandsparameters erfolgt, der in dem Ermittlungsschritt ermittelt wurde.

Eine zwölfte Variante betrifft eine Anordnung zur Ermittlung eines Wertes wenigstens eines Zustandsparameters eines Schienenfahrzeugs und/oder einer Fahrstrecke eines Schienenfahrzeugs, insbesondere zur Durchführung eines Verfahrens gemäß einer der ersten bis elften Variante, mit einem Schienenfahrzeug, einer Erfassungseinrichtung und wenigstens einer Datenverarbeitungseinrichtung, wobei die Erfassungseinrichtung dazu ausgebildet ist, in wenigstens einem Erfassungsschritt wenigstens einen mit dem aktuellen Wert des Zustandsparameters korrelierten aktuellen ersten Erfassungssignal über einen ersten Signalaufnehmer an dem Schienenfahrzeug zu erfassen, und die Datenverarbeitungseinrichtung dazu ausgebildet ist, in einem Ermittlungsschritt den Wert des wenigstens einen Zustandsparameters unter Verwendung des aktuellen ersten Erfassungssignals der Erfassungseinrichtung aus wenigstens einem vorangegangenen Erfassungsschritt zu ermitteln, die Erfassungseinrichtung ein erster Signalaufnehmer eines mobilen Endgerätes ist, das an einer Struktur im Inneren des Fahrzeugs an wenigstens einer Messposition und/oder in wenigstens einer Messorientierung angeordnet ist, wobei die Datenverarbeitungseinrichtung dazu ausgebildet ist, zur Ermittlung des Wertes des wenigstens einen Zustandsparameters ein Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, auszuwerten.

Eine dreizehnte Variante betrifft eine Anordnung gemäß der zwölften Variante, wobei das mobile Endgerät ein Mobiltelefon, insbesondere ein Smartphone, oder ein Tablet-Computer oder ein mobiles Navigationsgerät oder eine SmartWatch ist und/oder der Signalaufnehmer wenigstens ein Beschleunigungssensor und/oder wenigstens ein Drehratensensor und/oder wenigstens ein Mikrofon und/oder eine Kamera und/oder wenigstens ein Temperatursensor des mobilen Endgerätes und/oder wenigstens ein Magnetfeldsensor des mobilen Endgerätes ist und/oder die Struktur im Inneren des Fahrzeugs eine Ablageeinrichtung, insbesondere eine Gepäckablage und/oder ein Tisch und/oder eine Ablage eines Sitzes und/oder ein Fach des Fahrzeugs, ist und das mobile Endgerät für den Erfassungsschritt mit der Ablageeinrichtung verbindbar ist, insbesondere auf die Ablageeinrichtung aufgelegt ist, und/oder die Struktur im Inneren des Fahrzeugs eine Wandeinrichtung, insbesondere eine Seitenwand, ist und das mobile Endgerät für den Erfassungsschritt mit der Wandeinrichtung verbindbar ist, und/oder das mobile Endgerät für den Erfassungsschritt fest, insbesondere im Wesentlichen starr, mit der Struktur im Inneren des Fahrzeugs verbunden ist, und/oder eine Klemmeinrichtung vorgesehen ist, mittels derer das mobile Endgerät für den Erfassungsschritt mit der Struktur im Inneren des Fahrzeugs verbindbar ist, und/oder eine Halterung vorgesehen ist, mittels derer das mobile Endgerät für den Erfassungsschritt mit der Struktur im Inneren des Fahrzeugs verbindbar ist, wobei die Halterung insbesondere in einem Fach des Fahrzeugs angeordnet ist, wobei das Fach insbesondere verschließbar ausgebildet ist, und/oder die Halterung insbesondere einer Ladeeinrichtung für das Endgerät räumlich zugeordnet ist, und/oder eine mit der Struktur im Inneren des Fahrzeugs verbindbare Halterung für das mobile Endgerät vorgesehen ist, wobei die Halterung insbesondere dazu ausgebildet ist, das mobile Endgerät für einen ersten Erfassungsschritt in einer vorgebbaren ersten Messposition und/oder Messorientierung zu halten und für einen zweiten Erfassungsschritt in einer vorgebbaren zweiten Messposition und/oder Messorientierung zu halten.

Eine vierzehnte Variante betrifft eine Anordnung gemäß der zwölften oder dreizehnten Variante, wobei die wenigstens eine Datenverarbeitungseinrichtung eine Datenverarbeitungseinrichtung des Fahrzeugs ist und/oder die wenigstens eine Datenverarbeitungseinrichtung eine Datenverarbeitungseinrichtung des mobilen Endgerätes ist.

Eine fünfzehnte Variante betrifft ein mobiles Endgerät, insbesondere ein Mobiltelefon, zur Ermittlung eines Wertes wenigstens eines Zustandsparameters eines Schienenfahrzeugs und/oder einer Fahrstrecke eines Schienenfahrzeugs, insbesondere zur Durchführung eines Verfahrens gemäß einer der ersten bis elften Variante, mit wenigstens einem ersten Signalaufnehmer und einer Datenverarbeitungseinrichtung, wobei der wenigstens eine erste Signalaufnehmer zur Erfassung wenigstens eines mit dem aktuellen Wert des Zustandsparameters korrelierten aktuellen ersten Erfassungssignals ausgebildet ist, wobei die Datenverarbeitungseinrichtung dazu ausgebildet ist, zur Ermittlung des Wertes des wenigstens einen Zustandsparameters ein Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, auszuwerten und/oder die Datenverarbeitungseinrichtung dazu ausgebildet ist, das aktuelle erste Erfassungssignal zur Ermittlung des Wertes des wenigstens einen Zustandsparameters in einer Form an eine weitere Datenverarbeitungseinrichtung auszugeben, welche die Auswertung eines Frequenzbereich des aktuellen ersten Erfassungssignals oberhalb von 1 Hz bis 2 Hz, vorzugsweise von 4 Hz bis 15 kHz, weiter vorzugsweise von 10 Hz bis 1 kHz, in der weiteren Datenverarbeitungseinrichtung (108, 109) ermöglicht.

## Patentansprüche

1. Verfahren zur Ermittlung eines Wertes wenigstens eines Zustandsparameters eines Schienenfahrzeugs (101) und/oder einer Fahrstrecke eines Schienenfahrzeugs (101), bei dem
- in wenigstens einem Erfassungsschritt wenigstens ein mit dem aktuellen Wert des Zustandsparameters korreliertes aktuelles erstes Erfassungssignal über einen ersten Signalaufnehmer (106.1, 106.2, 106.3) an einer Struktur im Inneren des Schienenfahrzeugs (101) erfasst wird, wobei
- zur Erfassung des aktuellen ersten Erfassungssignals ein erster Signalaufnehmer (106.1, 106.2, 106.3) eines mobilen Endgerätes (106) verwendet wird,
**dadurch gekennzeichnet, dass**
- zur Ermittlung des Wertes des wenigstens einen Zustandsparameters ein Frequenzbereich des aktuellen ersten Erfassungssignals oberhalb von 2 Hz, ausgewertet wird, wobei
- der erste Signalaufnehmer (106.1; 106.2; 106.3) ein interner Sensor (106.1; 106.2; 106.3) des mobilen Endgerätes (106) ist,
wobei
- als Signalaufnehmer wenigstens ein Beschleunigungssensor (106.1) des mobilen Endgerätes (106) verwendet wird
und
- als Signalaufnehmer wenigstens ein Drehratensensor (106.3) des mobilen Endgerätes (106) verwendet wird
und
- als Signalaufnehmer wenigstens eine Kamera des mobilen Endgerätes (106) verwendet wird.

2. Verfahren nach Anspruch 1, **dadurch gekennzeichnet, dass**
- als mobiles Endgerät (106) ein Mobiltelefon, insbesondere ein Smartphone, verwendet wird
oder
- als mobiles Endgerät (106) ein Tablet-Computer verwendet wird
oder
- als mobiles Endgerät (106) ein mobiles Navigationsgerät verwendet wird
oder
- als mobiles Endgerät (106) eine SmartWatch verwendet wird.

3. Verfahren nach Anspruch 1 oder 2, wobei
- als Signalaufnehmer wenigstens ein Mikrofon (106.2) des mobilen Endgerätes (106) verwendet wird
und/oder
- als Signalaufnehmer wenigstens ein Temperatursensor des mobilen Endgerätes und/oder wenigstens ein Magnetfeldsensor des mobilen Endgerätes (106) verwendet wird.

4. Verfahren nach einem der Ansprüche 1 bis 3, wobei
- die Struktur im Inneren des Fahrzeugs (101) eine Ablageeinrichtung, insbesondere eine Gepäckablage und/oder ein Tisch (105.1) und/oder eine Ablage eines Sitzes (105.2) und/oder ein, insbesondere verschließbares, Fach (105.4) des Fahrzeugs, ist und das mobile Endgerät (106) für den Erfassungsschritt mit der Ablageeinrichtung verbunden wird, insbesondere auf die Ablageeinrichtung (105.1) aufgelegt wird,
und/oder
- die Struktur im Inneren des Fahrzeugs (101) eine Wandeinrichtung (102.1, 102.2), insbesondere eine Seitenwand (102.1), ist und das mobile Endgerät (106) für den Erfassungsschritt mit der Wandeinrichtung (102.1, 102.2) verbunden wird,
und/oder
- das mobile Endgerät (106) für den Erfassungsschritt fest, insbesondere im Wesentlichen starr, mit der Struktur im Inneren des Fahrzeugs (101) verbunden wird,
und/oder
- das mobile Endgerät (106) für den Erfassungsschritt mittels einer Klemmeinrichtung mit der Struktur im Inneren des Fahrzeugs (101) verbunden wird,
und/oder
- das mobile Endgerät (106) für den Erfassungsschritt mittels einer Halterung (105.3, 110) mit der Struktur im Inneren des Fahrzeugs (101) verbunden wird, wobei die Halterung insbesondere in einem Fach (105.4) des Fahrzeugs (101) angeordnet wird, wobei das Fach (105.4) insbesondere verschließbar ausgebildet ist, und/oder die Halterung (105.3, 110) insbesondere einer Ladeeinrichtung (111) für das Endgerät (106) räumlich zugeordnet wird,
und/oder
- das mobile Endgerät (106) für einen ersten Erfassungsschritt bei einem ersten Durchfahren eines vorgebbaren Streckenabschnitts der Fahrstrecke in einer vorgebbaren ersten Messposition und/oder Messorientierung mit der Struktur im Inneren des Fahrzeugs (101) verbunden wird und das mobile Endgerät (106) für einen zweiten Erfassungsschritt bei einem zweiten Durchfahren des vorgebbaren Streckenabschnitts in einer vorgebbaren zweiten Messposition und/oder Messorientierung mit der Struktur im Inneren des Fahrzeugs (101) verbunden wird.

5. Verfahren nach einem der Ansprüche 1 bis 4, wobei
- in einem Ermittlungsschritt der Wert des wenigstens einen Zustandsparameters unter Verwendung des aktuellen ersten Erfassungssignals aus wenigstens einem vorangegangenen Erfassungsschritt ermittelt wird, wobei
- in dem Ermittlungsschritt der Wert des wenigstens einen Zustandsparameters insbesondere unter Verwendung der aktuellen ersten Erfassungssignale aus einer Mehrzahl von vorangegangenen Erfassungsschritten ermittelt wird.

6. Verfahren nach Anspruch 5, wobei
- der Wert des wenigstens einen Zustandsparameters in dem Ermittlungsschritt unter Verwendung von wenigstens einem Vergleichserfassungssignal aus wenigstens einem vorangegangenen Vergleichserfassungsschritt ermittelt wird, wobei
- der Wert des wenigstens einen Zustandsparameters in dem Ermittlungsschritt insbesondere unter Verwendung der aktuellen ersten Erfassungssignale aus einer Mehrzahl von vorangegangenen Erfassungsschritten und einer Mehrzahl von Vergleichserfassungssignalen aus einer Mehrzahl von vorangegangenen Vergleichserfassungsschritten ermittelt wird,
und/oder
- der wenigstens eine Vergleichserfassungsschritt insbesondere an dem Fahrzeug durchgeführt wurde oder an einem Vergleichsfahrzeug durchgeführt wurde, welches dem Fahrzeug zumindest nach dem Fahrzeugtyp entspricht,
und/oder
- der wenigstens eine Vergleichserfassungsschritt insbesondere an dem Fahrzeug in einem bekannten Zustand, insbesondere in einem Neuzustand oder einem Wartungszustand, durchgeführt wurde, in dem ein definierter Wert des wenigstens einen Zustandsparameters gegeben ist.

7. Verfahren nach Anspruch 5 oder 6, wobei
- der Wert des wenigstens einen Zustandsparameters in dem Ermittlungsschritt unter Verwendung von wenigstens einem Vergleichsmodellwert ermittelt wird, der aus einem Vergleichsmodell des Fahrzeugs (101) ermittelt wurde, wobei
- das Vergleichsmodell insbesondere wenigstens einen erwarteten Wert des ersten Erfassungssignales zum Zeitpunkt der Erfassung des wenigstens einen aktuellen ersten Erfassungssignales liefert.

8. Verfahren nach einem der Ansprüche 1 bis 7, wobei
- in dem wenigstens einen Erfassungsschritt wenigstens ein mit dem aktuellen Wert des wenigstens einen Zustandsparameters korreliertes aktuelles zweites Erfassungssignal über einen zweiten Signalaufnehmer (106.1, 106.2, 106.3) an dem Schienenfahrzeug erfasst wird und
- in dem Ermittlungsschritt der Wert des wenigstens einen Zustandsparameters unter Verwendung des aktuellen ersten Erfassungssignals und des aktuellen zweiten Erfassungssignals aus wenigstens einem vorangegangenen Erfassungsschritt, insbesondere aus einer Mehrzahl von vorangegangenen Erfassungsschritten, ermittelt wird,
wobei
- zur Erfassung des aktuellen zweiten Erfassungssignals insbesondere ein zweiter Signalaufnehmer (106.1, 106.2, 106.3) des mobilen Endgerätes (106) verwendet wird,
und/oder
- zur Ermittlung des Wertes des wenigstens einen Zustandsparameters insbesondere ein Frequenzbereich des aktuellen zweiten Erfassungssignals oberhalb von 1 Hz bis 2 Hz, vorzugsweise von 4 Hz bis 15 kHz, weiter vorzugsweise von 10 Hz bis 1 kHz, ausgewertet wird,
und/oder
- zur Ermittlung des Wertes des wenigstens einen Zustandsparameters insbesondere im Wesentlichen derselbe Frequenzbereich des aktuellen ersten und zweiten Erfassungssignals ausgewertet wird,
und/oder
- als erster Signalaufnehmer (106.1, 106.2, 106.3) insbesondere wenigstens ein Beschleunigungssensor und/oder wenigstens ein Drehratensensor des mobilen Endgerätes (106) verwendet wird und als zweiter Signalaufnehmer (106.1, 106.2, 106.3) insbesondere wenigstens ein Mikrofon des mobilen Endgerätes (106) verwendet wird.

9. Verfahren nach einem der Ansprüche 1 bis 8, wobei
- der Wert des wenigstens einen Zustandsparameters für einen Zustand, insbesondere einen Verschleißzustand und/oder einen Integritätszustand wenigstens einer Fahrzeugkomponente des Fahrzeugs (101) repräsentativ ist, wobei
- die Fahrzeugkomponente insbesondere eine Komponente eines Fahrwerks des Fahrzeugs (101) ist
und/oder
- die Fahrzeugkomponente insbesondere eine Komponente einer Antriebseinrichtung des Fahrzeugs (101) ist
und/oder
- die Fahrzeugkomponente insbesondere eine Komponente einer Hilfsbetriebseinrichtung des Fahrzeugs (101), insbesondere einer Klimaanlage und/oder eines Kompressors des Fahrzeugs (101), ist.

10. Verfahren nach einem der Ansprüche 1 bis 9, wobei
- das erste Erfassungssignal mit einer für den Zeitpunkt seiner Erfassung repräsentativen Zeitkennung und/oder mit einer für die aktuelle Position des Fahrzeugs (101) und/oder des Endgeräts repräsentativen Positionskennung und/oder mit wenigstens einer für den aktuellen Betriebszustand des Fahrzeugs (101), insbesondere eine aktuelle Fahrgeschwindigkeit des Fahrzeugs (101), repräsentativen Betriebsinformation, und/oder mit einer Kennung des Fahrzeugs (101), insbesondere einmaligen und eindeutigen Kennung des Fahrzeugs (101), und/oder mit einer für die Position des Endgeräts (106) innerhalb des Fahrzeugs (101) während des Erfassungsschritts repräsentativen Messpositionsinformation verknüpft gespeichert wird,
wobei
- der Wert des wenigstens einen Zustandsparameters in dem Ermittlungsschritt insbesondere unter Verwendung der Positionskennung und von einer für den Zustand der befahrenen Fahrstrecke repräsentativen Streckeninformation ermittelt wird,
und/oder
- der wenigstens eine Zustandsparameter insbesondere ein Zustandsparameter des Fahrzeugs (101) ist und der Wert des wenigstens einen Zustandsparameters in dem Ermittlungsschritt unter Verwendung der Positionskennung und von ersten Erfassungssignalen aus einer Mehrzahl von Überfahrten des Fahrzeugs (101) über einen vorgebbaren Streckenabschnitt der Fahrstrecke ermittelt wird,
und/oder
- der wenigstens eine Zustandsparameter insbesondere ein Zustandsparameter der Fahrstrecke ist und der Wert des wenigstens einen Zustandsparameters in dem Ermittlungsschritt unter Verwendung der Positionskennung und von ersten Erfassungssignalen aus einer Mehrzahl von Überfahrten des Fahrzeugs (101) über einen vorgebbaren Streckenabschnitt der Fahrstrecke und/oder aus Überfahrten einer Mehrzahl von unterschiedlichen Fahrzeugen über einen vorgebbaren Streckenabschnitt der Fahrstrecke ermittelt wird,
und/oder
- das erste Erfassungssignal in einer gegen Manipulation abgesicherten Weise, insbesondere in einer gegen unerkannte Manipulation abgesicherten Weise, gespeichert wird, insbesondere verschlüsselt wird und/oder mit einer digitalen Signatur versehen wird;
und/oder
- die Kennung des Fahrzeugs (101) und/oder die Messepositionsinformation in einem Erkennungsschritt über eine Eingabeeinrichtung, insbesondere eine drahtlose Kommunikationseinrichtung und/oder einen Barcodescanner, insbesondere automatisch bei Betreten des Fahrzeugs und/oder bei Verbinden des Endgeräts (106) mit einer Halterung (105.3, 110) des Fahrzeugs (101), in das Endgerät (106) eingegeben wird.

11. Verfahren nach einem der Ansprüche 1 bis 10, wobei
- der Ermittlungsschritt in einer Datenverarbeitungseinheit des mobilen Endgerätes (106) und/oder des Fahrzeugs (101) und/oder einer entfernten Datenzentrale (108) vorgenommen wird
und/oder
- die in dem wenigstens einen Erfassungsschritt aufgenommenen Erfassungssignale des mobilen Endgerätes (106) und/oder daraus abgeleitete Auswertedaten zur Durchführung des Ermittlungsschritts über eine Kommunikationseinrichtung (106.6) des mobilen Endgerätes (106) in einem Übermittlungsschritt, insbesondere über ein drahtloses Kommunikationsnetzwerk (107), an eine Datenverarbeitungseinheit des Fahrzeugs (101) und/oder einer entfernten Datenzentrale (108) als Übermittlungsdaten übermittelt werden, wobei in einem dem Übermittlungsschritt nachfolgenden Vergütungsschritt insbesondere eine Vergütung für die Übermittlung der Übermittlungsdaten erfolgt,
und/oder
- in einem Reaktionsschritt eine Reaktion in Abhängigkeit von dem Wert des wenigstens einen Zustandsparameters erfolgt, der in dem Ermittlungsschritt ermittelt wurde.

12. Verfahren nach einem der Ansprüche 1 bis 11, wobei
- zur Ermittlung des Wertes des wenigstens einen Zustandsparameters ein Frequenzbereich des aktuellen ersten Erfassungssignals von 4 Hz bis 15 kHz, vorzugsweise von 10 Hz bis 1 kHz, ausgewertet wird.

13. Anordnung zur Ermittlung eines Wertes wenigstens eines Zustandsparameters eines Schienenfahrzeugs (101) und/oder einer Fahrstrecke eines Schienenfahrzeugs (101), insbesondere zur Durchführung des Verfahrens nach einem der Ansprüche 1 bis 12, mit
- einem Schienenfahrzeug (101),
- einer Erfassungseinrichtung (106) und
- wenigstens einer Datenverarbeitungseinrichtung (106.4, 108, 109), wobei
- die Erfassungseinrichtung (106) dazu ausgebildet ist, in wenigstens einem Erfassungsschritt wenigstens ein mit dem aktuellen Wert des Zustandsparameters korreliertes aktuelles erstes Erfassungssignal über wenigstens einen ersten Signalaufnehmer (106.1, 106.2, 106.3) an dem Schienenfahrzeug zu erfassen, und
- die Datenverarbeitungseinrichtung (106.4, 108, 109) dazu ausgebildet ist, in einem Ermittlungsschritt den Wert des wenigstens einen Zustandsparameters unter Verwendung des aktuellen ersten Erfassungssignals der Erfassungseinrichtung (106) aus wenigstens einem vorangegangenen Erfassungsschritt zu ermitteln,
- der wenigstens eine erste Signalaufnehmer (106.1, 106.2, 106.3) ein Signalaufnehmer eines mobilen Endgerätes (106) ist, das an einer Struktur im Inneren des Fahrzeugs (101) an wenigstens einer Messposition und/oder in wenigstens einer Messorientierung angeordnet ist,
**dadurch gekennzeichnet, dass**
- die Datenverarbeitungseinrichtung (106.4, 108, 109) dazu ausgebildet ist, zur Ermittlung des Wertes des wenigstens einen Zustandsparameters einen Frequenzbereich des aktuellen ersten Erfassungssignals oberhalb von 2 Hz auszuwerten, wobei
- der wenigstens eine erste Signalaufnehmer (106.1; 106.2; 106.3) ein interner Sensor (106.1; 106.2; 106.3) des mobilen Endgerätes (106) ist, wobei
- als erster Signalaufnehmer wenigstens ein Beschleunigungssensor (106.1) des mobilen Endgerätes (106) verwendet wird
und
- als erster Signalaufnehmer wenigstens ein Drehratensensor (106.3) des mobilen Endgerätes (106) verwendet wird
und
- als erster Signalaufnehmer wenigstens eine Kamera des mobilen Endgerätes (106) verwendet wird.

14. Anordnung nach Anspruch 13, wobei
- das mobile Endgerät (106) ein Mobiltelefon, insbesondere ein Smartphone, oder ein Tablet-Computer oder ein mobiles Navigationsgerät oder eine SmartWatch ist und/oder
- als der wenigstens eine Signalaufnehmer (106.1, 106.2, 106.3) zusätzlich wenigstens ein Mikrofon und/oder wenigstens ein Temperatursensor des mobilen Endgerätes und/oder wenigstens ein Magnetfeldsensor des mobilen Endgerätes (106) verwendet wird
und/oder
- die Struktur im Inneren des Fahrzeugs (101) eine Ablageeinrichtung, insbesondere eine Gepäckablage und/oder ein Tisch (105.1) und/oder eine Ablage (105.3) eines Sitzes (105.2) und/oder ein Fach (105.4) des Fahrzeugs (101), ist und das mobile Endgerät (106) für den Erfassungsschritt mit der Ablageeinrichtung verbindbar ist, insbesondere auf die Ablageeinrichtung aufgelegt ist,
und/oder
- die Struktur im Inneren des Fahrzeugs (101) eine Wandeinrichtung, insbesondere eine Seitenwand, ist und das mobile Endgerät (106) für den Erfassungsschritt mit der Wandeinrichtung verbindbar ist,
und/oder
- das mobile Endgerät (106) für den Erfassungsschritt fest, insbesondere im Wesentlichen starr, mit der Struktur im Inneren des Fahrzeugs (101) verbunden ist,
und/oder
- eine Klemmeinrichtung (110) vorgesehen ist, mittels derer das mobile Endgerät (106) für den Erfassungsschritt mit der Struktur im Inneren des Fahrzeugs (101) verbindbar ist,
und/oder
- einer Halterung (105.3, 110) vorgesehen ist, mittels derer das mobile Endgerät (106) für den Erfassungsschritt mit der Struktur im Inneren des Fahrzeugs (101) verbindbar ist, wobei die Halterung (110) insbesondere in einem Fach (105.4) des Fahrzeugs angeordnet ist, wobei das Fach (105.4) insbesondere verschließbar ausgebildet ist, und/oder die Halterung (105.3, 110) insbesondere einer Ladeeinrichtung für das Endgerät (106) räumlich zugeordnet ist,
und/oder
- eine mit der Struktur im Inneren des Fahrzeugs (101) verbindbare Halterung für das mobile Endgerät (106) vorgesehen ist, wobei die Halterung insbesondere dazu ausgebildet ist, das mobile Endgerät (106) für einen ersten Erfassungsschritt in einer vorgebbaren ersten Messposition und/oder Messorientierung zu halten und für einen zweiten Erfassungsschritt in einer vorgebbaren zweiten Messposition und/oder Messorientierung zu halten.

15. Anordnung nach Anspruch 13 oder 14, wobei
- die wenigstens eine Datenverarbeitungseinrichtung (109) eine Datenverarbeitungseinrichtung des Fahrzeugs (101) ist
und/oder
- die wenigstens eine Datenverarbeitungseinrichtung (106.4) eine Datenverarbeitungseinrichtung des mobilen Endgerätes (106) ist.

16. Mobiles Endgerät, insbesondere Mobiltelefon, zur Ermittlung eines Wertes wenigstens eines Zustandsparameters eines Schienenfahrzeugs (101) und/oder einer Fahrstrecke eines Schienenfahrzeugs (101), insbesondere zur Durchführung des Verfahrens nach einem der Ansprüche 1 bis 12, mit
- wenigstens einem ersten Signalaufnehmer (106.1, 106.2, 106.3) und
- einer Datenverarbeitungseinrichtung (106.4), wobei
- der wenigstens eine erste Signalaufnehmer (106.1, 106.2, 106.3) zur Erfassung wenigstens eines mit dem aktuellen Wert des Zustandsparameters korrelierten aktuellen ersten Erfassungssignals ausgebildet ist,
**dadurch gekennzeichnet, dass**
- der erste Signalaufnehmer (106.1; 106.2; 106.3) ein interner Sensor (106.1; 106.2; 106.3) des mobilen Endgerätes (106) ist, wobei
- als erster Signalaufnehmer wenigstens ein Beschleunigungssensor (106.1) des mobilen Endgerätes (106) verwendet wird
und
- als erster Signalaufnehmer wenigstens ein Drehratensensor (106.3) des mobilen Endgerätes (106) verwendet wird
und
- als erster Signalaufnehmer wenigstens ein Mikrofon (106.2) des mobilen Endgerätes (106) verwendet wird,
wobei
- die Datenverarbeitungseinrichtung (106.) dazu ausgebildet ist, zur Ermittlung des Wertes des wenigstens einen Zustandsparameters einen Frequenzbereich des aktuellen ersten Erfassungssignals oberhalb von 2 Hz, auszuwerten.
